# EUROPEAN PATENT SPECIFICATION

(11) **EP 2 729 543 B1**
(45) Date of publication and mention of the grant of the patent: **19.09.2018**
(21) Application number: 12807155.2
(22) Date of filing: 03.07.2012
(51) Int. Cl.: C09D 175/04, C03C 17/32, B65D 13/02

(54) **WATERBORNE POLYURETHANE COATING COMPOSITIONS**
WÄSSRIGE POLYURETHAN-BESCHICHTUNGSZUSAMMENSETZUNGEN
COMPOSITIONS AQUEUSES DE REVÊTEMENT À BASE DE POLYURÉTHANE

(30) Priority: 06.07.2011 US 201113176871
(43) Date of publication of application: 14.05.2014
(73) Proprietor: Covestro LLC, Pittsburgh, PA 15205 (US); Covestro Deutschland AG, 51373 Leverkusen (DE)
(72) Inventor: SUBRAMANIAN, Ramesh, Coraopolis, PA 15108 (US); STEWART, Raymond, Lawrence, PA 15055 (US); EKIN, Abdullah, Imperial, PA 15126 (US); CORSO, William, Coraopolis, PA 15108 (US); SMEDLEY, Larry, Pittsburgh, PA 15136 (US); POHL, Torsten, 51377 Leverkusen (DE)
(74) Representative: Levpat
(86) International application number: PCT/US2012/045378
(87) International publication number: WO 2013/006605

(56) References cited:
- EP-B1- 1 127 093
- JP-A- 2006 265 310
- US-A- 5 349 041
- US-A- 5 852 106
- US-A1- 2011 045 219
- US-A1- 2011 045 219

## Description

### TECHNICAL FIELD

This disclosure relates to one-component waterborne polyurethane coating compositions and to the use of such compositions for coating substrates.

### BACKGROUND

Glass substrates may be coated, for example, to provide a decorative effect or to enhance substrate properties. For instance, glass substrates may be coated to provide anti-shattering properties, abrasion resistance, increased elasticity, and solvent resistance. Glass containers, for example, may benefit from clear coatings that provide mechanical protection to the external surfaces to help minimize mechanical damage, such as scuffing or marring, to the containers during transportation, storage, filling operations, and distribution.

### SUMMARY

Embodiments disclosed in this specification are directed to aqueous polyurethane coating compositions. The aqueous polyurethane coating compositions comprise a polyol resin, an aminoplast resin, and a polycarbonate-polyurethane resin.

In various embodiments, an aqueous polyurethane coating composition which is free of blocking agents comprises: (a) a water-dilutable hydroxy-functional polyurethane resin; (b) a water-dilutable aminoplast resin; and (c) a water-dilutable polycarbonate-polyurethane resin. The water-dilutable hydroxy-functional polyurethane resin comprises a reaction product of: (A1) a polyisocyanate comprising 50 to 100 weight percent of an aliphatic diisocyanate; (A2) a polyol having an OH number of 25 to 350 mg KOH/g solids; and (A3) an isocyanate-reactive component comprising an ionic group or potentially ionic group. The hydroxy-functional polyurethane resin component (a) and the aminoplast resin component (b) react at temperatures above ambient temperature to form crosslinks. The polycarbonate-polyurethane resin is non-functional.

It is understood that the invention disclosed and described in this specification is not limited to the embodiments summarized in this Summary.

### DESCRIPTION

Various embodiments are described and illustrated in this specification to provide an overall understanding of the structure, function, operation, manufacture, and use of the disclosed products and processes. It is understood that the various embodiments described and illustrated in this specification are non-limiting and non-exhaustive. Thus, the invention is not limited by the description of the various non-limiting and non-exhaustive embodiments disclosed in this specification. Rather, the invention is defined solely by the claims. The features and characteristics illustrated and/or described in connection with various embodiments may be combined with the features and characteristics of other embodiments. Such modifications and variations are intended to be included within the scope of this specification. As such, the claims may be amended to recite any features or characteristics expressly or inherently described in, or otherwise expressly or inherently supported by, this specification. Further, Applicant reserves the right to amend the claims to affirmatively disclaim features or characteristics that may be present in the prior art. Therefore, any such amendments comply with the requirements of 35 U.S.C. § 112, first paragraph, and 35 U.S.C. § 132(a). The various embodiments disclosed and described in this specification can comprise, consist of, or consist essentially of the features and characteristics as variously described herein.

Any patent, publication, or other disclosure material identified herein is incorporated by reference into this specification in its entirety unless otherwise indicated, but only to the extent that the incorporated material does not conflict with existing definitions, statements, or other disclosure material expressly set forth in this specification. As such, and to the extent necessary, the express disclosure as set forth in this specification supersedes any conflicting material incorporated by reference herein. Any material, or portion thereof, that is said to be incorporated by reference into this specification, but which conflicts with existing definitions, statements, or other disclosure material set forth herein, is only incorporated to the extent that no conflict arises between that incorporated material and the existing disclosure material. Applicant reserves the right to amend this specification to expressly recite any subject matter, or portion thereof, incorporated by reference herein.

Reference throughout this specification to "various non-limiting embodiments," or the like, means that a particular feature or characteristic may be included in an embodiment. Thus, use of the phrase "in various non-limiting embodiments," or the like, in this specification does not necessarily refer to a common embodiment, and may refer to different embodiments. Further, the particular features or characteristics may be combined in any suitable manner in one or more embodiments. Thus, the particular features or characteristics illustrated or described in connection with various embodiments may be combined, in whole or in part, with the features or characteristics of one or more other embodiments without limitation. Such modifications and variations are intended to be included within the scope of the present specification. In this manner, the various embodiments described in this specification are non-limiting and non-exhaustive.

In this specification, other than where otherwise indicated, all numerical parameters are to be understood as being prefaced and modified in all instances by the term "about", in which the numerical parameters possess the inherent variability characteristic of the underlying measurement techniques used to determine the numerical value of the parameter. At the very least, and not as an attempt to limit the application of the doctrine of equivalents to the scope of the claims, each numerical parameter described in the present description should at least be construed in light of the number of reported significant digits and by applying ordinary rounding techniques.

Also, any numerical range recited in this specification is intended to include all sub-ranges subsumed within the recited range. For example, a range of "1 to 10" is intended to include all sub-ranges between (and including) the recited minimum value of 1 and the recited maximum value of 10, that is, having a minimum value equal to or greater than 1 and a maximum value equal to or less than 10. Any maximum numerical limitation recited in this specification is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such sub-ranges would comply with the requirements of 35 U.S.C. § 112, first paragraph, and 35 U.S.C. § 132(a).

The grammatical articles "one", "a", "an", and "the", as used in this specification, are intended to include "at least one" or "one or more", unless otherwise indicated. Thus, the articles are used in this specification to refer to one or more than one (*i.e.,* to "at least one") of the grammatical objects of the article. By way of example, "a component" means one or more components, and thus, possibly, more than one component is contemplated and may be employed or used in an implementation of the described embodiments. Further, the use of a singular noun includes the plural, and the use of a plural noun includes the singular, unless the context of the usage requires otherwise.

The various embodiments disclosed and described in this specification provide waterborne (*i.e.,* aqueous) polyurethane coating compositions that exhibit properties beneficial for substrates such as, for example, glass substrates. The aqueous polyurethane coating compositions disclosed herein provide cured coating films exhibiting decreased hardness, increased flexibility, increased impact resistance, good substrate adhesion in severe environments, increased abrasion resistance, increased solvent resistance. The aqueous polyurethane coating compositions provide beneficial properties to substrates such as, for example, glass substrates. The aqueous polyurethane coating compositions may be one-component compositions that are free of blocking agents. The aqueous polyurethane coating compositions may comprise aminoplast crosslinking components for thermal curing.

One-component coating compositions comprise pre-mixed compositions that have acceptable pot-life and storage stability, and are applied to substrates and cured under specific conditions such as, for example, at elevated temperatures or upon exposure to ultraviolet light. One-component systems include, for example, hydroxy-functional resins crosslinked with alkoxylated aminoplast resins or reversibly blocked isocyanates. In contrast, two-component coating compositions comprise two separate and mutually reactive components that are mixed immediately prior to application to substrate. The separate components respectively contain ingredients that are reactive under ambient conditions and that begin appreciable formation of cured resin immediately upon mixture. Therefore, the two components must remain separated until immediately before application due to limited pot-life.

U.S. Patent No. 4,280,944, describes aqueous polyether-based polyurethane dispersions, which, by virtue of the free hydroxyl groups and blocked isocyanate groups contained therein, constitute a one-component system, which can be thermally cured. However, it may be desirable to provide one-component aqueous polyurethane dispersion coating compositions that do not contain blocking agents and are thermally curable. Use of melamine as a crosslinker is one alternative to crosslink hydroxy-functional polyurethane dispersions.

EP-A 519,074, discloses an aqueous glass coating composition that is applied in two coats, wherein the topcoat contains three main components: an aqueous polyurethane dispersion, an aqueous epoxy resin, and an aqueous melamine/formaldehyde resin. The polyurethane dispersion achieves the required final properties only after the addition of substantial quantities of the other two resins. Accordingly, the disclosed coating composition is a multicomponent composition as opposed to a one-component composition. Aminoplast crosslinking components, such as, for example, melamine crosslinkers, may be added to waterborne polyurethane coating compositions to provide one-component thermally-curable waterborne polyurethane coating compositions that are free of blocking agents. Generally, the addition of aminoplast crosslinking components increases the hardness of the cured coating film. As such, the use of aminoplast crosslinking components may result in undesirable coating properties such as, for example, increased brittleness, decreased impact resistance, and decreased abrasion resistance.

These effects may be particularly problematic for substrates such as, for example, glass materials, which may readily show mechanical surface damage of relatively hard and brittle coating films on the substrate. Further, relatively hard and brittle coating films tend to exhibit increased mechanical abrasion, wear, and erosion. However, the present inventors discovered one-component thermally-curable aqueous polyurethane coating compositions that are free of blocking agents, that contain aminoplast crosslinking components, and that exhibit low hardness and high flexibility, high impact resistance and toughness, and high abrasion resistance.

The one-component thermally-curable aqueous polyurethane coating compositions disclosed herein may comprise: (a) a polyol resin; (b) an aminoplast resin, and (c) a polycarbonate-polyurethane resin. As used herein, the term "polyurethane" refers to polymeric or oligomeric materials comprising urethane groups, urea groups, or both. The term "polyurethane" also refers to polymeric or oligomeric resins or crosslinked polymer networks comprising urethane groups, urea groups, or both. As used herein, the term "polyol" refers to compounds comprising at least two unreacted hydroxyl groups. Polyols may include monomers, polymers and/or oligomers comprising at least two pendant and/or terminal hydroxyl groups.

In various non-limiting embodiments, the polyol resin component (a) is a water-dilutable hydroxy-functional polyurethane resin. As used herein, the term "water-dilutable" refers to solubility as a molecular solution in water, or dispersability as a dispersion, emulsion, suspension, colloid, sol, or the like, in water, with or without external dispersants, emulsifiers, surfactants, co-solvents, or the like. As used herein, the term "hydroxy-functional" refers to molecules comprising at least one unreacted hydroxyl group.

In various non-limiting embodiments, the polyol resin component (a) of the aqueous polyurethane coating compositions may comprise a water-dilutable hydroxy-functional polyurethane resin. As used herein, the term " polyurethane resin" refers to oligomeric or polymeric macromolecules comprising and at least one of urethane groups or urea groups.

The water-dilutable hydroxy-functional polyurethane resin may comprise a reaction product of: (A1) a polyisocyanate component; (A2) a polyol component; and (A3) an isocyanate-reactive component comprising an ionic group or potentially ionic group. As used herein, the term "polyisocyanate" refers to compounds comprising at least two unreacted isocyanate groups. Polyisocyanates include diisocyanates and diisocyanate reaction products comprising, for example, urethane groups, urea groups, uretdione groups, uretonimine groups, isocyanurate groups, iminooxadiazine dione groups, oxadiazine trione groups, carbodiimide groups, acyl urea groups, biuret groups, and/or allophanate groups.

In various non-limiting embodiments, the polyisocyanate component (A1) may comprise a monomeric organic diisocyanate represented by the formula, R(NCO)₂, in which R represents an organic group. In various non-limiting embodiments, R represents a divalent aliphatic hydrocarbon group having from 4 to 18 carbon atoms, a divalent cycloaliphatic hydrocarbon group having from 5 to 15 carbon atoms, a divalent araliphatic hydrocarbon group having from 7 to 15 carbon atoms, or a divalent aromatic hydrocarbon group having 6 to 15 carbon atoms.

Examples of suitable monomeric diisocyanates include, for example: 1,4-tetra-methylene diisocyanate; 1,6-hexamethylene diisocyanate; 1-methyl-2,4(2,6)-diisocyanatocyclohexane; 2,2,4-trimethyl-1,6-hexamethylene diisocyanate; 2,4,4-trimethyl-1,6-hexamethylene diisocyanate; 1,12-dodecamethylene diisocyanate; cyclohexane-1,3- diisocyanate; cyclohexane-1,4-diisocyanate; 1-isocyanato-2-isocyanatomethyl cyclopentane; 1-isocyanato-3-isocyanatomethyl-3,5,5-trimethyl-cyclohexane (isophorone diisocyanate), bis-(4-isocyanato-cyclohexyl)-methane; 1,3- and 1,4-bis-(isocyanatomethyl)-cyclohexane; bis-(4-isocyanatocyclo-hexyl)-methane; 2,4'-diisocyanato-dicyclohexyl methane; bis-(4-isocyanato-3-methyl-cyclohexyl)-methane; α,α,α',α'-tetramethyl-1,3- and/or -1,4-xylylene diisocyanate; 1-isocyanato-1-methyl-4(3)-isocyanatomethyl cyclohexane; 2,4- and/or 2,6-hexahydro-toluylene diisocyanate; 1,3- and/or 1,4-phenylene diisocyanate; 2,4- and/or 2,6-toluene diisocyanate; 2,2'-, 2,4'-, and/or 4,4'-diphenylmethane diisocyanate; naphthalene-1,5-diisocyanate; isomers of any thereof; and combinations of any thereof.

In various non-limiting embodiments, the polyisocyanate component may comprise a monomeric isocyanate comprising three or more isocyanate groups such as, for example, 4-isocyanatomethyl-1,8-octamethylene diisocyanate. The polyisocyanate component may comprise polyphenyl polymethylene polyisocyanates obtained by phosgenating aniline/ formaldehyde condensates. The polyisocyanate component may also comprise aromatic isocyanates having three or more isocyanate groups, such as, for example, 4,4',4"-triphenylmethane triisocyanate.

The polyisocyanate component (A1) may also comprise diisocyanate adducts and/or oligomers comprising urethane groups, urea groups, uretdione groups, uretonimine groups, isocyanurate groups, iminooxadiazine dione groups, oxadiazine trione groups, carbodiimide groups, acyl urea groups, biuret groups, and/or allophanate groups. For example, the polyisocyanate component may include:
(1) Isocyanurate group-containing polyisocyanates that may be prepared as set forth in DE-PS 2,616,416; EP-OS 3,765; EP-OS 10,589; EP-OS 47,452; U.S. Patent No. 4,288,586; and U.S. Patent No. 4,324,879, which are incorporated by reference into this specification;
(2) Uretdione diisocyanates that may be prepared by oligomerizing a portion of the isocyanate groups of a diisocyanate in the presence of a suitable catalyst, *e.g.,* a trialkyl phosphine catalyst, and which may optionally be used in admixture with other isocyanates, particularly the isocyanurate group-containing polyisocyanates set forth under (1) above;
(3) Biuret group-containing polyisocyanates that may be prepared according to the processes disclosed in U.S. Patent. Nos. 3,124,605; 3,358,010; 3,644,490; 3,862,973; 3,906,126; 3,903,127; 4,051,165; 4,147,714; and 4,220,749, which are incorporated by reference into this specification, by using co-reactants such as water, tertiary alcohols, primary and secondary monoamines, and primary and/or secondary diamines;
(4) Iminooxadiazine dione and, optionally, isocyanurate group-containing polyisocyanates, that may be prepared in the presence of fluorine-containing catalysts as described in DE-A 19611849, which is incorporated by reference into this specification;
(5) Carbodiimide group-containing polyisocyanates that may be prepared by oligomerizing diisocyanates in the presence of carbodiimidization catalysts as described in DE-PS 1,092,007; U.S. Patent No. 3,152,162; and DE-OS 2,504,400, DE-OS 2,537,685, and DE-OS 2,552,350, which are incorporated by reference into this specification; and
(6) Polyisocyanates containing oxadiazinetrione groups, *e.g.,* the reaction product of two moles of a diisocyanate and one mole of carbon dioxide.

Polyisocyanate components (A1) comprising diisocyanate adducts and/or oligomers may have an average isocyanate group functionality of 2 to 6 or 2 to 4, for example. Polyisocyanate components (A1) comprising diisocyanate adducts and oligomers may have an average isocyanate (NCO) content of 5% to 30%, 10% to 25%, or 15% to 25%, by weight of the component.

In various non-limiting embodiments, the polyisocyanate component (A1) may be a monomeric (cyclo)aliphatic diisocyanate such as, for example, a diisocyanate selected from the group consisting of 1,6-hexamethylene diisocyanate (HDI); 1-isocyanato-3-isocyanatomethyl-3,5,5-trimethylcyclohexane (isophorone diisocyanate or IPDI); 4,4'-diisocyanatodicyclohexylmethane (H₁₂MDI); 1-methyl-2,4(2,6)-diisocyanatocyclohexane; isomers of any thereof; and combinations of any thereof. For example, in various non-limiting embodiments, H₁₂MDI may be used to produce a polyol resin component (a) comprising a water-dilutable hydroxy-functional polyether-polyurethane resin. In various non-limiting embodiments, the polyisocyanate component (A1) may comprise 50 to 100 weight percent of aliphatic diisocyanate and 0 to 50 weight percent of other aliphatic polyisocyanates having a molecular weight of 140 to 1500, such as, for example, diisocyanate adduct and/or oligomer.

In various non-limiting embodiments, the polyol component (A2) may comprise an oligomeric or polymeric compound having terminal and/or pendant hydroxyl groups. The hydroxyl functionality of the polyether polyol component (A2) may react with the isocyanate functionality of the polyisocyanate component (A1) to, at least in part, produce a water-dilutable hydroxy-functional polyurethane resin. The polyol may have an average hydroxyl functionality of 1 to 5, or any sub-range therein, such as, for example, 1 to 2, 1.5 to 2.5, 1.2 to 2.2, or 1.8 to 2.2. The polyol may have an average molecular weight of 300 to 10000 or any sub-range therein, such as, for example, 300 to 5000, 1000 to 8000, 1000 to 6000, 2000 to 6000, 500 to 3000, or 1000 to 3000. The polyol may have an OH number of 25 to 350 mg KOH/g solids.

In one non-limiting embodiment, the polyol component (A2) may comprise one or more polyether polyols. Examples of methods for preparing polyether polyols are described in U.S. Patent Nos. 3,278,457; 3,427,256; 3,829,505; 4,472,560; 3,278,458; 3,427,334; 3,941,849; 4,721,818; 3,278,459; 3,427,335; and 4,355,188, which are incorporated by reference into this specification. In various non-limiting embodiments, the polyether polyol may be a polyether diol produced, for example, by the alkoxylation of suitable starter molecules. For example, starter molecules, such as, for example, ethylene glycol, propylene glycol, 1,3-butanediol, 1,4-butanediol, 1,6 hexanediol, and/or 2-ethylhexane-diol-1,3, may be ethoxylated and/or propoxylated to produce polyethylene ether glycol, polypropylene ether glycol, or copolymers thereof. The Acclaim® family of polyether polyols based on propylene oxide (polyethylene ether glycol), available from Bayer MaterialScience LLC, Pittsburgh, PA, USA, may be used to produce a polyol resin component (a) comprising a water-dilutable hydroxy-functional polyether-polyurethane resin.

Alternatively, in various non-limiting embodiments, polyether polyamines may be used instead of, or in addition to, the polyether polyol component (A2). Polyether polyamines may be obtained, for example, by converting the hydroxyl groups of the polyether polyols described above into primary amino groups using reactions known in the art.

In one non-limiting embodiment, the polyol component (A2) may comprise a polyester polyol. The polyester polyols may be prepared in known manner from aliphatic, cycloaliphatic or aromatic dicarboxylic or polycarboxylic acids or anhydrides thereof (for example, succinic, glutaric, adipic, pimelic, suberic, azelaic, sebacic, nonanedicarboxylic, decanedicarboxylic, terephthalic, isophthalic, o-phthalic, tetrahydrophthalic, hexahydrophthalic or trimellitic acid) as well as acid anhydrides (such as o-phthalic, trimellitic or succinic acid anhydride or a mixture thereof) and dihydric alcohols such as, for example, ethanediol, diethylene, triethylene, tetraethylene glycol, 1,2-propanediol, dipropylene, tripropylene, tetrapropylene glycol, 1,3-propanediol, 1,4-butanediol, 1,3-butanediol, 2,3-butanediol, 1,5-pentanediol, 1,6-hexanediol, 2,2-dimethyl-1,3-propanediol, 1,4-dihydroxycyclohexane, 1,4-dimethylol-cyclohexane, 1,8-octanediol, 1,10-decanediol, 1,12-dodecanediol or mixtures thereof. Cycloaliphatic and/or aromatic dihydroxyl compounds are, of course, also suitable as the dihydric alcohol(s) for the preparation of the polyester polyol(s). The corresponding polycarboxylic acid anhydrides or corresponding polycarboxylic acid esters of low alcohols, or mixtures thereof, may also be used in place of the free polycarboxylic acid for the preparation of the polyesters.

The polyester polyols may naturally also be homopolymers or copolymers of lactones, which are preferably obtained by addition reactions of lactones or lactone mixtures, such as butyrolactone, ε-caprolactone and/or methyl- ε-caprolactone with the suitable difunctional starter molecules such as, for example, the low molecular weight dilyhydric alcohols mentioned above. The corresponding polymers of ε-caprolactone are preferred.

In various non-limiting embodiments, a polyester polyol component may comprise a reaction product of polyhydric alcohols and polybasic carboxylic acids, optionally, with monohydric alcohols and/or monocarboxylic acids, as described above. The polyester polyol may have an average hydroxyl functionality of 1 to 5, or any sub-range therein, such as, for example, 1 to 2, 1.5 to 2.5, 1.2 to 2.2, or 1.8 to 2.2. The polyester polyol may have an average molecular weight of 300 to 10000 or any sub-range therein, such as, for example, 300 to 5000, 1000 to 8000, 1000 to 6000, 2000 to 6000, 500 to 3000, or 1000 to 3000. The polyester polyol may have an OH number of 25 to 350 mg KOH/g solids.

In one non-limiting embodiment, the polyol component (A2) may comprise a polycarbonate polyol. In various non-limiting embodiments, a polycarbonate polyol component (A2) may comprise a polycondensation reaction product of polyhydric alcohols and phosgene or a polycondensation reaction product of polyhydric alcohols and diesters of carbonic acid. Suitable polyhydric alcohols include, for example, diols such as 1,3-propanediol; ethylene glycol; propylene glycol; 1,4-propanediol; diethylene glycol; triethylene glycol; tetraethylene glycol; 1,4-butanediol; 1,6-hexanediol; trimethylenepentanediol; 1,4-cyclohexanediol; 1,4-cyclohexanedimethanol; neopentyl glycol; 1,8-octanediol; and combinations of any thereof. Suitable polyhydric alcohols also include, for example, tri-functional and multi-functional hydroxyl compounds such as glycerol; trimethylolpropane; trimethylolethane; hexanetriol isomers; pentaerythritol; and combinations of any thereof. Tri-functional and multi-functional hydroxyl compounds may be used to produce a polycarbonate polyol having a branched structure. A polycarbonate polyol may have an average hydroxyl functionality of 1 to 5, or any sub-range therein, such as, for example, 1 to 2, 1.5 to 2.5, 1.2 to 2.2, or 1.8 to 2.2. A polycarbonate polyol may have an average molecular weight of 300 to 10000 or any sub-range therein, such as, for example, 300 to 5000, 1000 to 8000, 1000 to 6000, 2000 to 6000, 500 to 6000, 500 to 3000, or 1000 to 3000. A polycarbonate polyol may have an OH number of 25 to 350 mg KOH/g solids.

In one non-limiting embodiment, the polyol component (A2) may comprise a polyacrylic resin. As used herein, the term "polyacrylic resin" refers to oligomeric or polymeric macromolecules comprising residues of olefinically unsaturated monomers. Water-dilutable hydroxy-functional polyacrylic resins may comprise oligomers or polymers of olefinically unsaturated monomers that comprise hydroxyl groups; sulfonic acid groups and/or carboxyl groups; sulfonate groups and/or carboxylate groups; or other ionic groups or potentially ionic groups.

Water-dilutable hydroxy-functional polyacrylic resins may be produced by the copolymerization of: (A2i) olefinically unsaturated hydroxy-functional monomers; (A2ii) olefinically unsaturated monomers that comprise ionic groups or potentially ionic groups; and (A2iii) other olefinically unsaturated monomers. In various non-limiting embodiments, the copolymerization of components (A2i) through (A2iii) is carried out with component (A2ii) in potentially ionic form (e.g., comprising non-ionic sulfonic acid groups or carboxyl groups), that are at least partially converted to ionic form after copolymerization.

In various non-limiting embodiments, olefinically unsaturated hydroxy-functional monomers (A2i) may comprise, for example, hydroxyalkyl esters of acrylic acid or methacrylic acid (*e.g.,* comprising 2 to 4 carbon atoms in the hydroxyalkyl radical) such as 2-hydroxyethyl (meth)acrylate, the isomeric hydroxypropyl (meth)acrylates formed by addition of propylene oxide onto (meth)acrylic acid, the isomeric hydroxybutyl (meth)acrylates; and combinations of any thereof.

In various non-limiting embodiments, olefinically unsaturated monomers that comprise ionic groups or potentially ionic groups (A2ii) may comprise, for example, a carbonyl group or sulfonic acid group. Suitable monomers (A2ii) include, for example, olefinically unsaturated mono-carboxylic acids or dicarboxylic acids having a molecular weight of 72 to 207 such as, for example, acrylic acid; methacrylic acid; maleic acid; itaconic acid; and combinations of any thereof. Suitable monomers (A2ii) also include, for example, olefinically unsaturated compounds comprising sulfonic acid groups such as, for example 2-acrylamido-2-methyl propanesulfonic acid. Mixtures of any olefinically unsaturated monomers that comprise ionic groups or potentially ionic groups may also be used.

In various non-limiting embodiments, other olefinically unsaturated monomers (A2iii) may comprise, for example, olefinically unsaturated compounds that do not comprise ionic, potentially ionic groups, or hydroxyl groups. Suitable monomers (A2iii) include, for example, esters of acrylic acid or methacrylic acid comprising 1 to 18, or 1 to 8, carbon atoms in the alcohol radical, such as, for example methyl (meth)acrylate; ethyl (meth)acrylate; isopropyl (meth)acrylate; n-propyl (meth)acrylate; n-butyl (meth)acrylate; 2-ethylhexyl (meth)acrylate; n-stearyl (meth)acrylate; and combinations of any thereof. Suitable monomers (A2iii) also include, for example, styrene; alkyl-substituted styrenes; propenylbenzene; acrylonitrile; methacrylonitrile; vinyl acetate; vinyl stearate; epoxy-functional co-monomers such as glycidyl acrylate or glycidyl methacrylate; N-methoxymethacrylamide; methacrylamide; and combinations of any thereof.

Water-dilutable hydroxy-functional polyacrylic resins comprising polymerization products of components (A2i) through (A2iii) may be produced using polymerization methods such as, for example, bulk, solution, emulsion and suspension polymerization techniques using free-radical initiators. Suitable processes are described, for example, in U.S. Patent No. 5,331,039, which is incorporated by reference into this specification.

Olefinically unsaturated hydroxy-functional monomers (A2i) may be used in quantities sufficient to obtain desired hydroxyl numbers such as, for example, hydroxyl group contents of 0.5% to 8% by weight, or 1% to 5% by weight, of the water-dilutable hydroxy-functional polyacrylic resins. For instance, hydroxy-functional monomers (A2i) may be used in quantities of 3% to 75% by weight, or 6% to 47% by weight, based on the total weight of the monomers (A2i) through (A2iii). In various non-limiting embodiments, the quantities of hydroxy-functional monomers (A2iii) may be selected so that, on a statistical average, the polyacrylic copolymers formed comprise at least two hydroxyl groups per macromolecule.

In various non-limiting embodiments, olefinically unsaturated monomers (A2ii) that comprise ionic groups or potentially ionic groups may at least partially impart water-dilutability (*e.g.,* aqueous solubility or aqueous dispersability) to water-dilutable hydroxy-functional polyacrylic resins by covalently incorporating into the macromolecules, increasing the hydrophilicity of the macromolecules. The quantity of monomers (A2ii) used, and the degree of deprotonation of unreacted sulfonic acid or carboxyl groups, should be sufficient to produce a stable aqueous dispersion or aqueous solution, with or without external emulsifiers, dispersants, co-solvents, and the like, as appropriate. For instance, in various non-limiting embodiments, monomers (A2ii) may be used in quantities of 0.3% to 30% by weight, or 1% to 20% by weight, based on the total weight of the monomers (A2i) through (A2iii).

Depending upon the molecular weight of the polyacrylic resins, their content of ionic groups or potentially ionic groups, and/or any the presence of emulsifiers, co-solvents, and the like, waterborne systems comprising the polyacrylic resins may be either colloidal dispersions, molecular solutions, or mixtures of both. In embodiments using relatively low amounts of monomers (A2ii), aqueous dispersions (colloidal) generally form, but may comprise a small amount of polymer in aqueous solution. With higher contents of monomers (A2ii), increasing amounts of resin form an aqueous solution (and decreasing amounts of resin are in colloidal dispersion form). As the relative amount of monomers (A2ii) increases, more of the water-dilutable hydroxy-functional polyacrylic resin is capable of dissolution into aqueous solution.

Water-dilutable hydroxy-functional polyacrylic resins may have a weight average molecular weight, as determined by gel permeation chromatography using polystyrene as standard, of 500 to 100000, or 1000 to 50000; a hydroxyl number of 16.5 to 264 mg KOH/g, or 33 to 165 mg KOH/g; and an acid number of 5 to 125 mg KOH/g (based on any acid-based ionic groups or potentially ionic groups, wherein 25% to 100% are present in ionic salt form). Water-dilutable hydroxy-functional polyacrylic resins may be in the form of aqueous solutions and/or dispersions having a solids content 5% to 90% by weight, 10% to 60% by weight, 10% to 50% by weight, 20% to 45% by weight, or 20% to 40% by weight; may have a viscosity at 23°C of 10 to 100000 mPa.s, or 100 to 10000 mPa.s; and may have a pH of 5 to 10, or 6 to 9. Depending upon the molecular weight of the polyacrylic resins, their content of ionic groups or potentially ionic groups, and/or any the presence of emulsifiers, co-solvents, and the like, waterborne systems comprising the polyacrylic resins may be colloidal dispersions, molecular solutions, or mixtures of both. In various non-limiting embodiments, the polyol component A2 can be a polyether, polyester, polycarbonate and polyacrylic resin and/or combinations thereof.

In various non-limiting embodiments, the isocyanate-reactive component (A3) comprising an ionic group or potentially ionic group may at least partially impart water-dilutability (*e.g.,* aqueous solubility or aqueous dispersability) to water-dilutable hydroxy-functional polyether-polyurethane resins by covalently incorporating into the macromolecules, increasing the hydrophilicity of the macromolecules. The isocyanate-reactive component (A3) may comprise at least one ionic group or potentially ionic group, which may be either cationic or anionic in nature. The isocyanate-reactive component (A3) may also comprise at least one isocyanate-reactive group such as, for example, a hydroxyl group and/or an amine group. The isocyanate-reactive functionality of the isocyanate-reactive component (A3) and the hydroxyl functionality of the polyol component (A2) may react with the isocyanate functionality of the polyisocyanate component (A1) to, at least in part, produce a water-dilutable hydroxy-functional polyurethane resin.

Cationic and anionic isocyanate-reactive components (A3) include compounds comprising, for example, sulfonium groups, ammonium groups, phosphonium groups, carboxylate groups, sulfonate groups, phosphonate groups, or the corresponding non-ionic acid groups (*i.e.,* potentially ionic groups) that can be converted by deprotonation (*i.e.,* salt formation) into these groups.

Suitable isocyanate-reactive components (A3) include, for example, mono-hydroxycarboxylic acids; di-hydroxycarboxylic acids; mono-aminocarboxylic acids; di-aminocarboxylic acids; mono-hydroxysulfonic acids; di-hydroxysulfonic acids; mono-aminosulfonic acids; di-aminosulfonic acids; mono-hydroxyphosphonic; di-hydroxyphosphonic acids; mono-aminophosphonic acids; di-aminophosphonic acids; their ionic salts; and combinations of any thereof.

Suitable isocyanate-reactive components (A3) include, for example, dimethylolpropionic acid; dimethylolbutyric acid; hydroxypivalic acid; N-(2-aminoethyl)-β-alanine; ethylenediame-propyl- or butyl-sulfonic acid; 1,2- or 1,3-propylenediamine-β-ethylsulfonic acid; citric acid; glycolic acid; lactic acid; 2-aminoethylaminoethanesulfonic acid; glycine; alanine; taurine; lysine; 3,5-diaminobenzoic acid; an adduct of isophorone diisocyanate (IPDI) and acrylic acid (see, *e.g.,* European Patent No. 916,647) and its alkali metal and/or ammonium salts; an adduct of sodium bisulfite with but-2-ene-1,4-diol; polyethersulfonate; and the propoxylated adduct of 2-butenediol and NaHSO₃ (see, *e.g.,* German Patent No. 2,446,440).

Likewise, suitable isocyanate-reactive components (A3) include, for example, other 2,2-bis(hydroxymethyl)alkane-carboxylic acids such as dimethylolacetic acid and 2,2-dimethylolpentanoic acid. In addition, suitable isocyanate-reactive components (A3) include dihydroxysuccinic acid, Michael adducts of acrylic acid with amines such as isophoronediamine or hexamethylenediamine, or mixtures of such acids and/or dimethylolpropionic acid and/or hydroxypivalic acid. Further, suitable isocyanate-reactive components (A3) include sulfonic acid diols optionally comprising ether groups, for example, the compounds described in U.S. Pat. No. 4,108,814, which is incorporated by reference into this specification.

In various non-limiting embodiments, the water-dilutable hydroxy-functional polyurethane resin comprises a reaction product of components (A1), (A2), and an isocyanate-reactive component (A3) possessing carboxyl or carboxylate groups, sulfonic acid or sulfonate groups, and/or ammonium groups. The isocyanate-reactive component (A3) may be incorporated into water-dilutable hydroxy-functional polyether-polyurethane resin macromolecules by urethane-forming and/or urea-forming reactions between the isocyanate-reactive groups and the isocyanate groups of the polyisocyanate component (A1).

In various non-limiting embodiments, a polyol resin component (a) may comprise a water-dilutable hydroxy-functional polyether-polyurethane resin that is a reaction product of:
(A1) 20% to 60% by weight of a polyisocyanate component comprising 50% to 100% by weight of an aliphatic diisocyanate such as 4,4'-diisocyanatodicyclohexylmethane, and 0 to 50% by weight of other aliphatic polyisocyanates having a molecular weight of 140 to 1500;
(A2) 20% to 60% by weight of a polyol component having an OH number of 25 to 350 mg KOH/g solids;
(A3) 2% to 12% by weight of an anionic or potentially anionic component comprising an isocyanate-reactive group and an ionic or potentially ionic group;
(A4) 0% to 12% by weight of a nonionic hydrophilic component comprising one or two isocyanate-reactive groups and a lateral or terminal hydrophilic polyether chain;
(A5) 0% to 15% by weight of a polyhydric alcohol having 2 to 4 hydroxyl groups and a molecular weight of 62 to 250;
(A6) 0% to 15% by weight of a (cyclo)aliphatic polyamine having 2 to 4 amino groups and a molecular weight of 60 to 300;
(A7) 0% to 30% by weight of a (cyclo)aliphatic polyamine/polyol having a total of 2 to 4 hydroxyl and amino groups and a molecular weight of 61 to 300; and
(A8) 0% to 15% by weight of one or more stabilizing components that are mono-functional or di-functional for purposes of an isocyanate addition reaction and have 1 to 2 hydrazide groups and a molecular weight of 74 to 300.

In various embodiments, the weight percentages of (A1) to (A8) add up to 100 percent. Polyol resin components comprising a reaction product of components (A1) - (A8) comprise urethane groups and ether groups, are soluble or dispersible in water, and may have a number average molecular weight (that may be calculated from the hydroxyl group content and hydroxyl functionality) of 500 to 100000, in various embodiments, 1000 to 10000. Such polyol resin components comprise sufficient hydrophilic groups such as, for example, polyether chains comprising ethylene oxide units and/or carboxylate groups, to ensure the solubility or dispersibility of the polyol resin components in water. Polyol resin components that are not sufficiently hydrophilic for intrinsic water-dilutability may be used in admixture with external dispersants, emulsifiers, surfactants, co-solvents, and the like.

In various non-limiting embodiments, polyisocyanate component (A1) may comprise the aliphatic diisocyanates or cycloaliphatic diisocyanates described above. For example, component (A1) may be selected from the group consisting of HDI, IPDI, H₁₂MDI, 1-methyl-2,4(2,6)-diisocyanatocyclohexane, and combinations of any thereof. In various non-limiting embodiments, component (A1) may comprise H₁₂MDI.

In various non-limiting embodiments, polyol component (A2) may comprise the polyether polyols described above. For example, component (A2) may comprise polymers or copolymers of tetrahydrofuran, styrene oxide, propylene oxide, ethylene oxide, butylene oxide, and/or epichlorohydrin. In various non-limiting embodiments, component (A2) may comprise poly(propylene oxide), optionally co-polymerized with ethylene oxide monomers, which may be produced from starter molecules such as, for example, water; ethylene glycol; 1,2-propanediol; 1,3-propanediol; diethylene glycol; 1,4-butanediol; 1,6-hexanediol; 1,8-octanediol; neopentyl glycol; 2-methyl-1,3-propanediol; the bis-hydroxymethylcyclohexane isomers; 2,2-bis-(4-hydroxyphenyl)propane; amines comprising two NH bonds; trimethylolpropane; glycerol; and ethylenediamine. In various non-limiting embodiments, components (A2) comprising poly(propylene oxide-co-ethylene oxide) may comprise up to 10 weight percent of ethylene oxide units. Component (A2) may have a number average molecular weight (which may be calculated from the hydroxyl group content and hydroxyl functionality) of 300 to 5000 or 500 to 3000.

In various non-limiting embodiments, isocyanate-reactive component (A3) may comprise the isocyanate-reactive components described above. For example, component (A3) may comprise carboxylic acids (or carboxylates) comprising at least one hydroxyl group and/or amino group. In various non-limiting embodiments, isocyanate-reactive component (A3) may comprise carboxylic acids (or carboxylates) comprising two hydroxyl groups, two amino groups, or one hydroxyl group and one amino group. These carboxylic acids may be either in non-ionic carboxyl form or in anionic carboxylate (*i.e.,* salt) form. Non-ionic carboxylic groups are potentially anionic groups, while carboxylate groups obtained by deprotonation of the acids with bases are anionic groups. For example, the carboxylic acids may be in non-ionic carboxyl form during isocyanate addition reactions with the other components (*e.g.,* A1, A2, and A4-A8) and in anionic carboxylate form when the resulting reaction product (*i.e.,* a water-dilutable hydroxy-functional polyether-polyurethane resin) is dissolved or dispersed in water. Suitable aminocarboxylic acids or hydroxycarboxylic acids include, for example, dimethylolacetic acid; 2,2-dimethylolpropionic acid; 2,2-dimethylolbutyric acid; 2,2-dimethylol-pentanoic acid; dihydroxysuccinic acid; hydroxypivalic acid; and combinations of any thereof.

In various non-limiting embodiments, optional component (A4) may comprise a nonionic hydrophilic compound comprising one or two isocyanate-reactive groups such as, for example, hydroxyl groups or amino groups. An optional component (A4) may comprise a polyether chain. At least 80 weight percent of the polyether chains present in optional component (A4) may be ethylene oxide units. Propylene oxide units may also be present at up to about 20 weight percent of the polyether chain. Suitable nonionic hydrophilic compounds include, for example, mono-functional polyethylene glycol monoalkyl ethers having number average molecular weights (which may be calculated from the hydroxyl group content and hydroxyl functionality) of 350 to 5000. Also suitable for component (A4) are the mono-functional compounds having one isocyanate-reactive group and hydrophilic chains comprising ethylene oxide units as described, for example, in DE-A 2,651,506, which is incorporated by reference into this specification. Also suitable for component (A4) are diisocyanates and/or compounds comprising two isocyanate-reactive groups, which also comprise hydrophilic chains comprising lateral ethylene oxide units, such as those described in DE-A 2,551,094, which is incorporated by reference into this specification.

In various non-limiting embodiments, optional component (A5) may comprise a compound selected from the group consisting of ethylene glycol; propylene glycol; 1,4-butanediol; 1,6-hexanediol; glycerol; trimethylolpropane; trimethylolethane; hexanetriol isomers; pentaerythritol, and combinations of any thereof.

In various non-limiting embodiments, optional component (A6) may comprise a compound selected from the group consisting of ethylenediamine; 1,2-diaminopropane; 1,3-diaminopropane; 1,6-diaminohexane; 1,3-diamino-2,2-dimethyl-propane; isophoronediamine; 1,3-diamino-hexane; 1,4-diamino-hexane; 4,4'-diaminodicyclo-hexylmethane; 2,4-diamino-1-methylcyclohexane; 2,6-diamino-1-methylcyclohexane; 4,4'-diamino-3,3'-dimethyldicyclohexyl-methane; 1,4-bis-(2-aminoprop-2-yl)cyclohexane; hydrazine; hydrazides; mixtures of diamines and/or hydrazines; and combinations of any thereof. Optional component (A6) may also comprise higher functional polyamines such as, for example, diethylenetriamine; triethylenetetramine; dipropylenetriamine; tripropylene-tetramine; hydrogenated addition products of acrylonitrile onto aliphatic or cycloaliphatic diamines (*e.g.*, hexamethylenepropylenetriamine; tetramethylene-propylenetriamine; isophorone-propylenetriamine; 1,4-cyclohexanepropylenetriamine; 1,3-cyclohexanepropylenetriamine); and combinations of any thereof.

In various non-limiting embodiments, optional component (A7) may comprise compounds selected from the group consisiting of ethanolamine; diethanolamine; triethanolamine; hydroxyethyl-ethylenediamine; and combinations of any thereof.

In various non-limiting embodiments, optional component (A8) may comprise components selected from mono-functional and/or di-functional carboxylic acid hydrazides such as, for example, adipic acid dihydrazide; benzoic acid hydrazide; p-hydroxybenzoic acid hydrazide; isomeric terephthalic acid hydrazides; N-2,2,6,6-tetramethyl-4-piperidinyl-N-aminooxamide (*e.g.,* Luchem HA-R 100, Elf Atochem); 3-(4-hydroxy-3,5-di-t.-butylphenyl)propionic acid hydrazide; 2-hydroxy-3-t-butyl-5-methylphenylacetic acid hydrazide; or combinations of any thereof. Other suitable hydrazides include addition products prepared from cyclic carbonates and hydrazine, such as the products described in EP-A 654,490 and EP-A 682,051, which are incorporated by reference into this specification. Examples include the addition products of 1 mole of hydrazine and 1 mole of propylene carbonate, and 1 mole of hydrazine and 2 moles of propylene carbonate. In various non-limiting embodiments, optional component (A8) may comprise adipic acid dihydrazide and/or N-2,2,6,6-tetramethyl-4-piperidinyl-N-aminooxamide.

The amounts of the reactants may be selected such that the equivalent ratio of the isocyanate-reactive groups of components (A2) through (A8) to the isocyanate groups of component (A1) is 0.8:1 to 2:1, in other embodiments 0.95:1 to 1.5:1 and in other embodiments 0.95:1 to 1.2:1. The ionic groups or potentially ionic groups (*e.g*., carboxyl or carboxylate groups) of component (A3), any neutralizing agent used to neutralize the carboxyl groups, and the water used to prepare the solutions, dispersions, or the like, of the water-dilutable hydroxy-functional polyurethane resins are not included in the calculation of this equivalent ratio.

Component (A5) may be used in an amount of 0 to 75 weight percent, or 0 to 70 weight percent, based on the weight of component (A2). Component (A4) may be used in an amount such that 0 to 30 weight percent, or 0 to 20 weight percent, of ethylene oxide units are incorporated within terminally and/or laterally arranged polyether chains present in the macromolecules.

The quantity of component (A3) and the degree of neutralization of any ionic groups or potentially ionic groups (*e.g*., carboxyl/carboxylate groups) incorporated with component (A3) may be calculated such that 0.1 to 120 milliequivalents, or 1 to 80 milliequivalents, of such groups are present per 100 g of solids in the macromolecule products, provided that the total quantity of ionic groups or potentially ionic groups is sufficient to ensure the solubility or dispersibility of the resin in water. The nature and quantity ratios of components (A1) through (A8) may also be calculated such that the resulting water-dilutable hydroxy-functional polyether-polyurethane resins comprise up to 15 weight percent, up to 10 weight percent, or up to 5 weight percent, of unreacted hydroxyl groups based on resin solids.

Water-dilutable hydroxy-functional polyurethane resins comprising a reaction product of components (A1) through (A3), and, optionally, (A4) through (A8), may be produced in one or more reaction stages. A solvent that is inert towards isocyanate groups may be used such that the reaction products are obtained in the form of a solution in such a solvent. In this regard, "solution" means both a true molecular solution and a water-in-oil emulsion, which may occur, for example, if some of the structural components are used in the form of aqueous solutions. Suitable solvents include, for example, acetone, methyl ethyl ketone, N-methylpyrrolidone, and mixtures of these and/or other solvents. These solvents may be used in an amount sufficient to provide at least 10 weight percent solutions of the reaction products prepared from components (A1) to (A8). These solvents may be distilled off to form aqueous solutions or dispersions, free of solvent, comprising the water-dilutable hydroxy-functional polyurethane resin produced as a reaction product of components (A1) through (A8).

The water-dilutable hydroxy-functional polyurethane resins may be produced in the absence or presence of catalysts. Suitable catalysts are known in the art of polyurethane chemistry and include, for example, tertiary amines such as triethylamine, and tin compounds such as tin(II) octoate, dibutyltin oxide, and dibutyltin dilaurate. Suitable reaction processes for the production of dispersions or solutions of water-dilutable hydroxy-functional polyether-polyurethane resins include emulsifier/shear-force processes, acetone processes, prepolymer-mixing processes, melt-emulsification processes, ketimine processes, and spontaneous solids-dispersing processes (or processes derived therefrom). A description of suitable processes may be found, for example, in Methoden der Organischen Chemie, Houben-Weyl, 4th Edition, Volume E20/Part 2, p. 1682, Georg Thieme Verlag, Stuttgart, 1987, which is incorporated by reference into this specification.

A base used to at least partially deprotonate potentially ionic acid groups, such as, for example, carboxyl groups or sulfonic acid groups, may be added before, during, or after the addition of water to the water-dilutable hydroxy-functional polyether-polyurethane resins. Suitable bases include, for example, ammonia; N-methylmorpholine; dimethyl-isopropanolamine; triethylamine; dimethylethanolamine; methyldiethanol-amine; triethanolamine; morpholine; tripropylamine; ethanolamine; triisopropanolamine; 2-diethylamino-2-methyl-1-propanol; sodium hydroxide; lithium hydroxide; potassium hydroxide; and combinations of any thereof.

The amount of water used to form solutions or dispersions of the water-dilutable hydroxy-functional polyurethane resins may be selected such that the resulting solutions or dispersions have a solids content of 5% to 90% by weight, 10% to 60% by weight, 10% to 50% by weight, 20% to 45% by weight, or 20% to 40% by weight. Once water has been added, any co-solvent may be removed by distillation and/or added as appropriate.

Water-dilutable hydroxy-functional polyether-polyurethane resins may have a molecular weight (weight average, as determined by gel permeation chromatography using polystyrene as standard) of 500 to 100000, or 1000 to 50000; a hydroxyl number of 16.5 to 264 mg KOH/g, or 33 to 165 mg KOH/g; and an acid number of 5 to 125 mg KOH/g (based on any acid-based ionic groups or potentially ionic groups, wherein 25% to 100% are present in ionic salt form). Water-dilutable hydroxy-functional polyurethane resins may be in the form of aqueous solutions and/or dispersions having a solids content of 20% to 50% by weight; may have a viscosity at 23°C of 10 to 100000 mPa.s, or 100 to 10000 mPa.s; and may have a pH of 5 to 10, or 6 to 9. Depending upon the molecular weight of the polyurethane resins, their content of ionic groups or potentially ionic groups, and/or any presence of emulsifiers, co-solvents, and the like, waterborne systems comprising the polyurethane resins may be colloidal dispersions, molecular solutions, or mixtures of both.

In various non-limiting embodiments, the polyol resin component (a) of the aqueous polyurethane coating compositions disclosed herein may comprise a water-dilutable hydroxy-functional polyether-polyurethane resin as described in U.S. Patent No. 5,852,106, which is incorporated by reference into this specification.

In various non-limiting embodiments, the polyol resin component (a) of the aqueous polyurethane coating compositions disclosed herein may comprise a mixture of water-dilutable hydroxy-functional resins such as polyether-polyurethane resin, polyester resin, polyacrylic resin, or a combination of any thereof. Suitable water-dilutable hydroxy-functional resins, including polyether-polyurethane, polyester, and polyacrylic resins, are commercially available from Bayer MaterialScience LLC, Pittsburgh, PA, USA, under the Bayhydrol@ trademark.

In various non-limiting embodiments, the aminoplast resin component (b) of the aqueous polyurethane coating compositions disclosed herein may be selected from the group consisting of urea-based resins and melamine-based resins that are water-dilutable. As used herein, the term "aminoplast resin" refers to resins based on urea-formaldehyde or melamine-formaldehyde condensation products. Suitable aminoplast resins are commercially available from Cytec Surface Specialties Inc., Smyrna, GA, USA, under the Cymel® trademark. Aminoplast resins comprise functional groups, such as, for example, alkoxymethyl groups, which are reactive with hydroxyl groups at temperatures above ambient temperature. For instance, aminoplast resins comprising alkoxymethyl groups may be used to crosslink and cure polyol resins primarily by trans-esterifications reaction between the hydroxyl groups on the polyol resins and the alkoxymethyl groups on the aminoplast resin.

As used herein, the term "cured" refers to the condition of a liquid composition in which an applied film of the composition is at least set-to-touch as defined in ASTM D 5895 - *Standard Test Methods for Evaluating Drying or Curing During Film Formation of Organic Coatings Using Mechanical Recorder,* which is hereby incorporated by reference into this specification. As used herein, the terms "cure" and "curing" refer to the progression of an applied liquid composition from the liquid state to a cured state. The terms "cured", "cure", and "curing" encompass drying of compositions through solvent evaporation and chemical crosslinking of components in compositions.

In various non-limiting embodiments, the aminoplast resin component (b) of the aqueous polyurethane coating compositions disclosed herein may comprise a urea-based resin comprising a urea-formaldehyde condensation product. Suitable urea-formaldehyde condensation products include, for example, urea-formaldehyde condensates that are non-etherified, partially-etherified, or fully-etherified with monohydric alcohols comprising 1 to 20 carbon atoms.

In various non-limiting embodiments, the aminoplast resin component (b) of the aqueous polyurethane coating compositions may comprise a melamine-based resin comprising a melamine-formaldehyde condensation product. Suitable melamine-formaldehyde condensation products include, for example, melamine-formaldehyde condensates that are non-etherified, partially-etherified, or fully-etherified with monohydric alcohols comprising 1 to 20 carbon atoms. In various non-limiting embodiments, the aminoplast resin component (b) may comprise monomeric, oligomeric, or polymeric melamine-formaldehyde resins such as, for example, methylated melamines, ethylated melamines, propylated melamines, butylated melamines, and mixed alkylated melamines (*e.g*., methylated/butylated melamines).

In various non-limiting embodiments, the aminoplast resin component (b) may comprise methylol groups, alkoxymethyl groups, or both. An alkoxymethyl group may be of the general formula -CH₂OR¹, where R¹ is a linear, cyclic, or branched alkyl chain having from 1 to 20 carbon atoms. In various non-limiting embodiments, the aminoplast resin component (b) may comprise an oligomeric, methylated, and high-imino group-containing melamine-formaldehyde condensate comprising low methylol content. For example, the aminoplast resin component (b) may comprise an oligomeric methylated melamine-formaldehyde condensation product comprising imino groups, methoxymethyl groups, and methylol groups.

In various non-limiting embodiments, the polycarbonate-polyurethane resin component (c) of the aqueous polyurethane coating compositions disclosed herein may comprise a water-dilutable polycarbonate-polyurethane resin. As used herein, the term "polycarbonate-polyurethane resin" refers to oligomeric or polymeric macromolecules comprising carbonate groups and at least one of urethane groups or urea groups. Suitable polycarbonate-polyurethane resins include the aliphatic polycarbonate-polyurethane resin dispersions in water that are commercially available from Bayer MaterialScience, LLC, Pittsburgh, PA, USA, under the Bayhydrol® trademark.

A water-dilutable polycarbonate-polyurethane resin may comprise a reaction product of: (A1') a polyisocyanate component; (A2') a polycarbonate polyol component; and (A3') an isocyanate-reactive component comprising an ionic group or potentially ionic group.

In various non-limiting embodiments, a polyisocyanate component (A1') may comprise any one or more of the polyisocyanate components (A1) described above in connection with water-dilutable hydroxy-functional polyurethane resins. For example, a polyisocyanate component (A1') may comprise at least one of HDI, IPDI, H₁₂MDI, 1-methyl-2,4(2,6)-diisocyanatocyclohexane, and/or adducts of these diisocyanates comprising isocyanurate, uretdione, biuret, and/or iminooxadiazine dione groups.

In various non-limiting embodiments, a polycarbonate polyol component (A2') may comprise a polycondensation reaction product of polyhydric alcohols and phosgene or a polycondensation reaction product of polyhydric alcohols and diesters of carbonic acid. Suitable polyhydric alcohols include, for example, diols such as 1,3-propanediol; ethylene glycol; propylene glycol; 1,4-propanediol; diethylene glycol; triethylene glycol; tetraethylene glycol; 1,4-butanediol; 1,6-hexanediol; trimethylenepentanediol; 1,4-cyclohexanediol; 1,4-cyclohexanedimethanol; neopentyl glycol; 1,8-octanediol; and combinations of any thereof. Suitable polyhydric alcohols also include, for example, tri-functional and multi-functional hydroxyl compounds such as glycerol; trimethylolpropane; trimethylolethane; hexanetriol isomers; pentaerythritol; and combinations of any thereof. Tri-functional and multi-functional hydroxyl compounds may be used to produce a polycarbonate polyol having a branched structure.

A polycarbonate polyol may have an average hydroxyl functionality of 1 to 5, or any sub-range therein, such as, for example, 1 to 2, 1.5 to 2.5, 1.2 to 2.2, or 1.8 to 2.2. A polycarbonate polyol may have an average molecular weight of 300 to 10000 or any sub-range therein, such as, for example, 300 to 5000, 1000 to 8000, 1000 to 6000, 2000 to 6000, 500 to 6000, 500 to 3000, or 1000 to 3000. A polycarbonate polyol may have an OH number of 25 to 350 mg KOH/g solids.

In various non-limiting embodiments, an isocyanate-reactive component (A3') comprising an ionic group or potentially ionic group may comprise any one or more of the components (A3) described above in connection with water-dilutable hydroxy-functional polyether-polyurethane resins. For example, an isocyanate-reactive component comprising an ionic group or potentially ionic group may comprise at least one of dimethylolpropionic acid; dimethylolbutyric acid; and/or hydroxypivalic acid.

In various non-limiting embodiments, an optional isocyanate-reactive component (A4') may comprise, for example, chain extenders and/or chain terminators. A chain-extending and/or chain-terminating component may comprise an ionic group or potentially ionic group and at least one group that is reactive with isocyanate groups in an addition reaction. Examples of chain-extending components include, for example, methylenediamine; ethylenediamine; propylenediamine; 1,4-butylenediamine; 1,6-hexamethylenediamine; 2-methyl-1,5-pentanediamine (Dytek-A from DuPont); 1-amino-3,3,5-trimethyl-5-aminomethyl cyclohexane (isophorone diamine); piperazine; 1,4-diaminocyclohexane; bis(4-aminocyclohexyl)methane; adipic acid dihydrazide; alkylene oxide diamines; dipropylamine diethyleneglycol; N-(2-aminoethyl)-2-aminoethane sulfonic acid (or salt thereof); N-(2-aminoethyl)-2-aminopropionic acid (or salt thereof); and combinations of any thereof.

Examples of chain-terminating components include, for example, compounds having the formula: 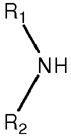 wherein R₁ is a hydrogen atom or alkyl radical, optionally having a hydroxyl end and R₂ is an alkyl radical, optionally having a hydroxyl end. Suitable chain-terminating compounds include compounds such as monoamines or monoalcohols. Examples include, but are not limited to, methylamine; ethylamine; propylamine; butylamine; octylamine; laurylamine; stearylamine; isononyloxy-propylamine; dimethylamine; diethylamine; dipropylamine; dibutylamine; N-methylaminopropylamine; diethyl(methyl)aminopropylamine; morpholine; piperidine; diethanolamine; and combinations of any thereof. Also suitable are chain terminating alcohols, such as, for example, C₁-C₁₀ or higher alcohols including, methanol, butanol, hexanol, 2-ethylhexyl alcohol, isodecyl alcohol, and the like, and mixtures thereof, as well as aminoalcohols, such as, for example, aminomethylpropanol (AMP).

A water-dilutable polycarbonate-polyurethane resin may be prepared by reacting components (A1') through (A4') using an acetone process or modification thereof. A description of suitable processes may be found, for example, in Methoden der Organischen Chemie, Houben-Weyl, 4th Edition, Volume E20/Part 2, p. 1682, Georg Thieme Verlag, Stuttgart, 1987, which is incorporated by reference into this specification.

A non-limiting example of an acetone process is described below. In a first stage an adduct comprising unreacted isocyanate groups is synthesized from a polyisocyanate component (A1'), a polycarbonate polyol component (A2'), and an isocyanate-reactive component (A3') comprising an ionic group or potentially ionic group. In a second stage, the adduct is dissolved in an organic, at least partially water-miscible, solvent comprising no isocyanate-reactive groups. Suitable solvents include acetone; methylethyl ketone (MEK); 2-butanone; tetrahydrofuran; dioxin; and combinations of any thereof. In a third stage, the unreacted isocyanate-containing adduct solution is reacted with mixtures of amino-functional chain-extenders and/or chain-terminators. An amino-functional chain-extender may comprise a sulfonic acid group or carboxyl group (in either nonionic acid form or ionic salt form). In a fourth stage, the water-dilutable polycarbonate-polyurethane resin product is dispersed in the form of a fine-particle dispersion by addition of water to the organic solution or by addition of the organic solution to water. In a fifth stage, the organic solvent is partially or wholly removed by distillation, optionally under reduced pressure.

A water-dilutable polycarbonate-polyurethane resin may be characterized by a glass transition temperature of between -60ºC and 0ºC, such as, for example, between -40ºC and -20ºC. A dispersion of a water-dilutable polycarbonate-polyurethane resin may have a viscosity at 25ºC of less than 1000 mPa•s or less than 500 mPa•s, for example, between 50 and 1000 mPa•s or 50 and 500 mPa•s. A water-dilutable polycarbonate-polyurethane resin may have a number average molecular weight range of 500 to 6000.

In various non-limiting embodiments, the one-component thermally-curable aqueous polyurethane coating compositions disclosed herein may be formulated by blending a polyol resin component (a); an aminoplast resin component (b), and a polycarbonate-polyurethane resin component (c). Polyol resin component (a) and aminoplast resin component (b) may be utilized in amounts such that an equivalent ratio of the alkoxymethyl groups of the aminoplast resin component (b) to the hydroxyl groups of the polyol resin component (a) is at least 0.05:1, for example from 0.05:1 to 20:1.

In various non-limiting embodiments, the polycarbonate-polyurethane resin component (c) is non-functional. As used herein, the term "non-functional," with respect to a chemical component of the one-component thermally-curable aqueous polyurethane coating compositions disclosed herein, refers to a substantial lack of chemical reactivity with polyol resin components (a) and aminoplast resin components (b). For example, a non-functional polycarbonate-polyurethane resin component (c) does not chemically react with components (a) and/or (b) of the coating composition during thermal curing. In this manner, a non-functional polycarbonate-polyurethane resin component (c) is substantially free of unreacted isocyanate groups, unreacted hydroxyl groups, isocyanate-reactive groups, hydroxyl-reactive groups, and other functional groups that may be reactive with any functional groups comprising polyol resin components (a) and aminoplast resin components (b).

The one-component thermally-curable aqueous polyurethane coating compositions disclosed herein may be produced by blending water-dilutable polyol resin component (a), water-dilutable aminoplast resin component (b), and water-dilutable polycarbonate-polyurethane resin component (c). These components may be blended in aqueous dispersion, aqueous solution, or a combination of aqueous dispersion and aqueous solution, optionally with emulsifiers, dispersants, surfactants, co-solvents, and/or the like. For instance, water-dilutable polyol resin component (a), water-dilutable aminoplast resin component (b), and water-dilutable polycarbonate-polyurethane resin component (c) may be provided as separate aqueous dispersions, aqueous solutions, and/or dispersion/solutions in water-miscible solvents, which are combined together to create an aqueous mixture of components (a), (b), and (c). It is also possible to mix any combination of the components (a), (b), and/or (c) in anhydrous form, or as a solution/dispersion in a non-aqueous water-miscible solvent, and then disperse the mixture of components (a), (b), and/or (c) in water.

One-component thermally-curable aqueous polyurethane coating compositions comprising a polyol resin component (a); an aminoplast resin component (b); and a polycarbonate-polyurethane resin component (c) may be characterized by a blended binder in which components (a) and (b) mutually react during curing to crosslink the resins, but component (c) is non-functional (*i.e.,* non-reactive) with components (a) and (b), and therefore, creates an interpenetrating non-crosslinked polymer network with respect to the crosslinked polymer network comprising a reaction product of components (a) and (b).

In various non-limiting embodiments, the one-component thermally-curable aqueous polyurethane coating compositions described herein may comprise: 1% to 99 % by weight, preferably 60% to 90% by weight, most preferably 70% to 80% by weight on a solids basis of a water-dilutable hydroxy-functional polyurethane resin; and a water-dilutable aminoplast resin; and 99% to 1% by weight, preferably 40% to 10% by weight, most preferably 30% to 20% by weight on a solids basis of a water-dilutable non-functional polycarbonate-polyurethane resin.

In various non-limiting embodiments, the weight ratio on a solids basis of the polyol resin component (a) to the aminoplast resin component (b) may be from 40:60 to 99:1. In various non-limiting embodiments, the weight ratio on a solids basis of the polyol resin component (a) to the aminoplast resin component (b) may be from 60:40 to 85:15.

In various non-limiting embodiments, one-component thermally-curable aqueous polyurethane coating compositions comprising a polyol resin component (a); an aminoplast resin component (b); and a polycarbonate-polyurethane resin component (c) may comprise optional components such as, for example, additional water-dilutable resin components based on polymeric polyols. Additional water-dilutable resin components based on polymeric polyols may include, for example, polyether polyols, polyester polyols, polyepoxide polyols, polylactone polyols, polyacrylate polyols, polycarbonate polyols, and combinations of any thereof. Additional water-dilutable resin components may be formulated in admixture in aqueous solution and/or aqueous dispersion with the resin components (a), (b), and (c).

In various non-limiting embodiments, one-component thermally-curable aqueous polyurethane coating compositions comprising a polyol resin component (a); an aminoplast resin component (b); and a polycarbonate-polyurethane resin component (c) may be dried and/or thermally cured by any suitable means known to those skilled in the art such as, for example, air drying, accelerated drying by exposure to heat, and thermal curing by exposure to heat. For example, in various non-limiting embodiments, one-component thermally-curable aqueous polyurethane coating compositions comprising a polyol resin component (a); an aminoplast resin component (b); and a polycarbonate-polyurethane resin component (c) may be thermally cured by exposure to temperatures of 100°C to 250°C for 15 minutes to 60 minutes. The energy needed to cure the system can come from any source known to those skilled in the art including, but not limited to conventional convection ovens, infared heat sources, microwaves, electron beams, or combination thereof.

The one-component thermally-curable aqueous polyurethane coating compositions disclosed herein may produce cured coating films that exhibit microhardness values of no greater than 100 N/mm² (Martens/Universal Hardness). In various non-limiting embodiments, the one-component thermally-curable aqueous polyurethane coating compositions disclosed herein may produce cured coating films that exhibit microhardness values of no greater than 80 N/mm², 75 N/mm², 65 N/mm², 55 N/mm², 50 N/mm², 45 N/mm², 35 N/mm², 25 N/mm², 20 N/mm², or 5 N/mm².

In various non-limiting embodiments, the one-component thermally-curable aqueous polyurethane coating compositions disclosed herein may produce cured coating films that exhibit impact strength values of at least (or greater than) 60 in-lbs (direct and/or reverse, determined according to ASTM D2794 - 93 (2010): *Standard Test Method for Resistance of Organic Coatings to the Effects of Rapid Deformation (Impact),* which is incorporated by reference into this specification). In various non-limiting embodiments, the one-component thermally-curable aqueous polyurethane coating compositions disclosed herein may produce cured coating films that exhibit impact strength values of at least 120 in-lbs, 140 in-lbs, or 160 in-lbs.

In various non-limiting embodiments, the one-component thermally-curable aqueous polyurethane coating compositions disclosed herein may also comprise silane-functional adhesion promoters such as, for example, the adhesion promoters disclosed in U.S. Patent No. 6, 403,175, which is incorporated by reference into this specification. Suitable adhesion promoters include, for example, γ-mercaptopropyltrimethoxysilane; 3-aminopropyltriethoxysilane; 3-aminopropylsilane hydrolysate; 3-glycidyloxypropyltriethoxysilane; and combinations of any thereof.

The one-component thermally-curable aqueous polyurethane coating compositions disclosed herein may be applied to substrates using any suitable methods, such as, for example, spraying; knife coating; curtain coating; vacuum coating; rolling; pouring; dipping; spin coating; squeegeeing; brushing; squirting; screen printing; gravure printing; flexographic printing; or offset printing. Suitable substrates include, for example, glass; wood; metal; paper; leather; textiles; felt; concrete; masonry; ceramic; stone; and plastics such as, for example, moldings and films of ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM, and UP (abbreviations according to DIN 7728T1). The one-component thermally-curable aqueous polyurethane coating compositions disclosed herein may be applied to substrates comprising combinations of the above materials. The one-component thermally-curable aqueous polyurethane coating compositions disclosed herein may also be applied as undercoatings or overcoatings with other coatings. The one-component thermally-curable aqueous polyurethane coating compositions disclosed herein may also be applied to a temporary substrate support, dried and/or cured partly or fully, and detached from the substrate support to produce free films, for example.

In various non-limiting embodiments, the one-component thermally-curable aqueous polyurethane coating compositions disclosed herein may be especially suitable for glass substrates, such as, for example, flat glass, glass panels, and glass containers such as glass jars or glass bottles. Further, the one-component thermally-curable aqueous polyurethane coating compositions disclosed herein provide marring resistance and durability, which may be advantageous, for example, during glass container filling operations. Glass substrates comprising the one-component thermally-curable aqueous polyurethane coating compositions disclosed herein may be characterized by good hand feel. The one-component thermally-curable aqueous polyurethane coating compositions disclosed herein may be applied to glass substrates with or without hot end coating, with or without cold end coating, or both; and with or without a silane pre-treatment of the glass substrates.

The one-component thermally-curable aqueous polyurethane coating compositions disclosed herein may provide design freedom to manufacture transparent, pigmented, high gloss, matte, and frosted looks on glass substrates. Suitable representative pigments that may be formulated into the one-component thermally-curable aqueous polyurethane coating compositions disclosed herein include, for example, rutile and anatase titanium dioxide, yellow and red iron oxides, green and blue copper phthalocyanine, carbon blacks, leafing and nonleafing aluminum, barium sulfate, calcium carbonate, sodium silicate, magnesium silicate, zinc oxide, antimony oxide, di-arylide yellow, monoarylide yellow, nickel arylide yellow, benzimidazolone oranges, naphthol reds, quinacridone reds, pearlescent pigments (e.g., mica platelets), bronze platelets, nickel platelets, stainless steel platelets, micronized matting agents (e.g., methylenediamino-methylether-polycondensate), and combinations of any thereof.

The one-component thermally-curable aqueous polyurethane coating compositions disclosed herein may be applied over a label (e.g. pressure-sensitive labels, UV-activated labels, heat transfer labels, and the like) or over a decorative organic and/or inorganic coating that has previously been applied to a glass substrate. Suitable decorative organic coatings that may be used with the one-component thermally-curable aqueous polyurethane coating compositions disclosed herein include, for example, EcoBrite Organic Ink (PPG Industries, Inc., Pittsburgh, PA, USA) and SpecTruLite (Ferro Corporation, Cleveland, OH, USA).

A primer treatment may be applied to a glass substrate before application of a one-component thermally-curable aqueous polyurethane coating composition as disclosed herein. The primer treatment may be any coating that provides lubrication to protect a glass substrate between the time of manufacture and the time of application of the coating and/or improves the adhesion of the coating to the glass substrate. A primer treatment may comprise both a hot end coating and a cold end coating. A glass substrate may not have a hot end coating, such that a primer treatment comprises a cold end coating applied only after the substrate has been substantially cooled. A primer treatment may comprise a cold end coating, the cold end coating comprising a diluted silane composition or mixture of a silane composition and a surface-treatment composition. Any silane composition suitable for use as a primer on a glass substrate may be used in a primer coating, non-limiting examples of which include monoalkoxy-silanes, dialkoxysilanes, trialkoxysilanes, and tetralkoxysilanes.

A surface-treatment composition may comprise polyethylene compositions, stearate compositions, or mixtures thereof, which do not require removal before the application of further coatings to the glass substrates. Stearate compositions may comprise the salts and esters of stearic acid (octadecanoic acid), such as, for example, a T5 stearate coating (Tegoglas, Arkema, Philadelphia, PA, USA). A primer coating may be in the form of an aqueous solution, dispersion, or emulsion. For example, a surface-treatment composition may comprise a polyethylene emulsion such as Duracote, Sun Chemical. A primer treatment also may comprise additional compositions to improve subsequently applied coatings, non-limiting examples of which include surfactants and lubricants.

In various non-limiting embodiments, the one-component thermally-curable aqueous polyurethane coating compositions disclosed herein may function as a primer coating and a topcoating, providing sufficient lubricity, mar resistance, and toughness for line processing of glass containers.

The non-limiting and non-exhaustive examples that follow are intended to further describe various non-limiting and non-exhaustive embodiments without restricting the scope of the embodiments described in this specification. In the following examples, all parts and percentages are by weight, unless otherwise indicated.

### EXAMPLES

One-component thermally-curable aqueous polyurethane coating compositions comprising a polyol resin, an aminoplast resin, and a polycarbonate-polyurethane resin were prepared as follows. Aqueous dispersions of a hydroxy-functional polyether-polyurethane resin were prepared as described in Example 1 of U.S. Patent No. 5,852,106, which is incorporated by reference into this specification. The hydroxy-functional polyether-polyurethane dispersions were mixed with Cymel® 327 (Cytec Surface Specialties Inc., Smyrna, GA, USA) and Bayhydrol® XP 2637 (Bayer MaterialScience LLC, Pittsburgh, PA, USA). Cymel® 327 is a methylated high-imino melamine resin provided at 88-92% solids content in iso-butanol. Bayhydrol® XP 2637 is an anionic aqueous dispersion of an aliphatic polycarbonate-polyurethane resin provided at 38-42% solids content in water without any co-solvent.

Dipropylene glycol, γ-mercaptopropyltrimethoxysilane (Silquest® A-189, Momentive Performance Materials, Albany, NY, USA), and 3-aminopropyl-triethoxysilane (Dynasylan® AMEO, Evonik Corporation, Parsippany, NJ, USA) were added with continuous stirring to the aqueous mixtures of the hydroxy-functional polyether-polyurethane resin, the aminoplast resin, and the polycarbonate-polyurethane resin. The resulting mixtures were agitated using a mechanical mixer until homogeneous mixtures were obtained. The homogeneous mixtures were deaerated and stored overnight before use. The mixtures were prepared according to the formulations provided in Tables 1 and 2 (parts by weight, solvent weight included).

**Table 1**

| **Formulations** | | | | | | | | | |
|---|---|---|---|---|---|---|---|---|---|
| | A | B | C | D | E | F | G | H | I |
| polyether-polyurethane resin dispersion | 97.7 | 94.8 | 92.3 | 90.5 | 87.2 | 74.8 | 60.5 | 83.1 | 73.8 |
| aminoplast resin | 0.3 | 3.2 | 5.7 | 7.5 | 10.8 | 23.2 | 37.5 | 5.2 | 4.6 |
| polycarbonate-polyurethane resin disperson | 0 | 0 | 0 | 0 | 0 | 0 | 0 | 9.8 | 19.6 |
| dipropylene glycol | 1.6 | 1.6 | 1.6 | 1.6 | 1.6 | 1.6 | 1.6 | 1.6 | 1.6 |
| γ-mercaptopropyltri methoxysilane | 0.2 | 0.2 | 0.2 | 0.2 | 0.2 | 0.2 | 0.2 | 0.2 | 0.2 |
| 3-aminopropyl-triethoxysilane | 0.2 | 0.2 | 0.2 | 0.2 | 0.2 | 0.2 | 0.2 | 0.2 | 0.2 |

| **Binder Resin Component Weight Ratios** | | | | | | | | | |
|---|---|---|---|---|---|---|---|---|---|
| polyether-polyurethane resin/ aminoplast resin (wt/wt on solids | 99/1 | 92/8 | 86/14 | 82/18 | 76/24 | 56/44 | 39/61 | 86/14 | 86/14 |

| **Coating Properties** | | | | | | | | | |
|---|---|---|---|---|---|---|---|---|---|
| Direct Impact (in-lbs) | 160 | 160 | 160 | 160 | 160 | 80 | 40 | 160 | 160 |
| Reverse Impact (in-lbs) | 160 | 160 | 160 | 160 | 60 | 20 | 20 | 160 | 160 |
| Microhardness (N/mm²) | 23 | 55 | 82 | 91 | 104 | 134 | 160 | 66 | 53 |
| Scribe adhesion | Pass | Pass | Pass | Pass | Pass | Pass | Pass | Pass | Pass |

**Table 2**

| **Formulations (continued)** | | | | | | | | | |
|---|---|---|---|---|---|---|---|---|---|
| | J | K | L | M | N | O | P | Q | R |
| polyether-polyurethane resin dispersion | 64.6 | 55.4 | 73.3 | 69.2 | 67.9 | 65.4 | 60.77 | 56.1 | 45.4 |
| aminoplast resin | 4.0 | 3.4 | 0.2 | 4.3 | 5.6 | 8.1 | 12.73 | 17.4 | 28.2 |
| polycarbonate-polyurethane resin disperson | 29.4 | 39.2 | 24.5 | 24.5 | 24.5 | 24.5 | 24.5 | 24.5 | 24.5 |
| dipropylene glycol | 1.6 | 1.6 | 1.6 | 1.6 | 1.6 | 1.6 | 1.6 | 1.6 | 1.6 |
| γ-mercaptopropyltrimethoxysilane | 0.2 | 0.2 | 0.2 | 0.2 | 0.2 | 0.2 | 0.2 | 0.2 | 0.2 |
| 3-aminopropyl-triethoxysilane | 0.2 | 0.2 | 0.2 | 0.2 | 0.2 | 0.2 | 0.2 | 0.2 | 0.2 |

| **Binder Resin Component Weight Ratios (continued)** | | | | | | | | | |
|---|---|---|---|---|---|---|---|---|---|
| polyether-polyurethane resin/ aminoplast resin (wt/wt on solids) | 86/14 | 86/14 | 99/1 | 86/14 | 82/18 | 76/24 | 65/35 | 56/44 | 39/61 |

| **Coating Properties (continued)** | | | | | | | | | |
|---|---|---|---|---|---|---|---|---|---|
| Direct Impact (in-lbs) | 160 | 160 | 160 | 160 | 160 | 160 | 160 | 160 | 160 |
| Reverse Impact (in-lbs) | 160 | 160 | 160 | 160 | 160 | 160 | 160 | 160 | 160 |
| Microhardness (N/mm²) | 44 | 34 | <20 | <20 | <20 | 23 | 36 | 80 | 96 |
| Scribe adhesion | Pass | Pass | Pass | Pass | Pass | Pass | Pass | Pass | Pass |

The one-component thermally-curable aqueous polyurethane coating compositions were tested for impact resistance, microhardness, and adhesion. Coatings for impact resistance testing were applied onto Bonderite B1000 cold rolled steel panels using a number 50 wire wound rod. Coatings for microhardness testing were applied onto glass disks using an Eppendorf pipettor (80 microliters) and spread over the disks using the pipettor tip. Coatings for adhesion testing were applied onto the airside of 4-inch by 4-inch glass Taber panels using a number 50 wire wound rod.

The applied coatings were cured at 120°C for 30 minutes in an oven. The coatings applied to the glass disks for microhardness testing were allowed to air-dry under ambient conditions for about 120 minutes before the oven cure. All testing was performed at least 24 hours after the applied coatings and substrates were removed from the oven. The testing of a number of the coating formulations was repeated with different curing conditions, including oven curing at 150°C for 25 minutes, 170°C for 20 minutes, 170°C for 30 minutes, 200°C for 15 minutes, and 200°C for 30 minutes. In all cases, the curing conditions did not affect the tested properties of the cured coatings, but yellowing of the cured coatings generally increased with increased temperature and time-at-temperature. The film thicknesses of the cured coatings on the steel panels were measured using a Fischerscope MMS instrument according to ASTM D1186-93: *Standard Test Methods for Nondestructive Measurement of Dry Film Thickness of Nonmagnetic Coatings Applied to a Ferrous Base,* which is incorporated by reference into this specification. The film thicknesses ranged from 0.5 to 0.75 mils.

Impact resistance testing was performed according to ASTM D2794 - 93 (2010): *Standard Test Method for Resistance of Organic Coatings to the Effects of Rapid Deformation (Impact),* which is incorporated by reference into this specification. Microhardness (Martens/Universal Hardness) testing was performed on a Fischerscope H100C instrument. Adhesion testing was performed according to ASTM D4060-95: *Standard Test Method for Abrasion Resistance of Organic Coatings by the Taber Abraser,* which is incorporated by reference into this specification. Scribe adhesion testing was performed on glass Taber panels. Two one-inch long scribes diagonal to each other were cut using a utility knife and the adhesion of the film to glass was inspected visually. If no film peeled from the substrate, the coating was marked as "pass".

The results of the impact resistance testing, microhardness testing, and scribe adhesion testing are presented in Tables 1 and 2. Formulations A through G showed that the microhardness of the coatings increases as the aminoplast resin content increases, which is believed to be a result of increased crosslink density. Increasing aminoplast resin content also correlated with decreased impact strength, decreased toughness, and decreased flexibility.

The addition of non-functional polycarbonate-polyurethane resin improved the flexibility, and toughness of the coatings, as shown by the decrease in microhardness and the increase in direct and/or reverse impact strength. Further, addition of non-functional polycarbonate-polyurethane resin did not have a negative effect on adhesion. For instance, formulations O, Q, and R, and formulations E, F, and G, respectively, had the same weight ratio of hydroxy-functional polyether-polyurethane resin to aminoplast resin. A comparison of formulation O with formulation E (both having a 76/24 weight ratio) shows that the addition of non-functional polycarbonate-polyurethane resin to formulation O decreased hardness and increased or maintained impact strength. Likewise, comparison of formulation Q with formulation F, and comparison of formulation R with formulation G, shows that the addition of non-functional polycarbonate-polyurethane resin to formulations Q and R decreased hardness and increased impact strength.

Further, formulations C, H, I, J, K, and M all had the same weight ratio of hydroxy-functional polyether-polyurethane resin to aminoplast resin. Formulation C was free of non-functional polycarbonate-polyurethane resin, and formulations H, I, M, J and K had increasing non-functional polycarbonate-polyurethane resin content. A comparison of formulation C with formulations H, I, M, J and K shows that increasing the content of non-functional polycarbonate-polyurethane resin decreases hardness while maintaining high impact strength and toughness, and good substrate adhesion.

As shown in the above examples, the one-component thermally-curable aqueous polyurethane coating compositions disclosed herein exhibit low hardness, high impact resistance, high toughness, high abrasion resistance, good adhesion to glass substrates, while being free of blocking agents and comprising aminoplast resins. These results are significant and unexpected because, generally, aminoplast resins produce relatively hard cured coating films when used to crosslink polyol resins. As such, the one-component thermally-curable aqueous polyurethane coating compositions disclosed herein facilitate the use of aminoplast crosslinking resins without undesirable coating properties such as, for example, increased brittleness, decreased impact resistance and toughness. Therefore, the one-component thermally-curable aqueous polyurethane coating compositions disclosed herein are particularly advantageous for substrates such as, for example, glass materials, which may readily show mechanical surface damage of relatively hard and brittle coating films on the substrate.

In various non-limiting embodiments, the one-component thermally-curable aqueous polyurethane coating compositions disclosed herein may be used to coat glass containers such as, for example, glass bottles and glass jars. The improved coating properties exhibited by the one-component thermally-curable aqueous polyurethane coating compositions disclosed herein (e.g., low hardness, high impact resistance, high toughness, good adhesion to glass substrates) are particularly advantageous in glass container manufacturing operations where the containers may undergo significant scuffing and/or marring as the containers are handled by machinery in line operations and experience line pressure. The one-component thermally-curable aqueous polyurethane coating compositions disclosed herein provide surface coatings that are capable of withstanding and absorbing impact pressures during line operations with minimal or zero surface scuffing, or marring.

## Claims

1. An aqueous polyurethane coating composition which is free of blocking agents comprising:
(a) a water-dilutable hydroxy-functional polyurethane resin comprising a reaction product of:
(A1) a polyisocyanate comprising 50 to 100 weight percent of an aliphatic diisocyanate;
(A2) a polyol having an OH number of 25 to 350 mg KOH/g solids; and
(A3) an isocyanate-reactive component comprising an ionic group or potentially ionic group;
(b) a water-dilutable aminoplast resin; and
(c) a water-dilutable polycarbonate-polyurethane resin,
wherein the polycarbonate-polyurethane resin is non-functional.

2. The aqueous polyurethane coating composition of claim 1, wherein the hydroxy-functional polyurethane resin component (a) comprises a reaction product of:
(A1) 20% to 60% by weight of a polyisocyanate component comprising 50% to 100% by weight of 4,4'-diisocyanatodicyclohexylmethane and 0 to 50% by weight of other aliphatic polyisocyanates having a molecular weight of 140 to 1500;
(A2) 20% to 60% by weight of a polyether polyol component having an OH number of 25 to 350 mg KOH/g solids;
(A3) 2% to 12% by weight of an anionic or potentially anionic component comprising an isocyanate-reactive group and an ionic or potentially ionic group;
(A4) 0% to 12% by weight of a nonionic hydrophilic component comprising one or two isocyanate-reactive groups and a lateral or terminal hydrophilic polyether chain;
(A5) 0% to 15% by weight of a polyhydric alcohol having 2 to 4 hydroxyl groups and a molecular weight of 62 to 250;
(A6) 0% to 15% by weight of a (cyclo)aliphatic polyamine having 2 to 4 amino groups and a molecular weight of 60 to 300;
(A7) 0% to 30% by weight of a (cyclo)aliphatic polyamine/polyol having a total of 2 to 4 hydroxyl and amino groups and a molecular weight of 61 to 300; and
(A8) 0% to 15% by weight of one or more stabilizing components that are monofunctional or di-functional for purposes of an isocyanate addition reaction and have 1 to 2 hydrazide groups and a molecular weight of 74 to 300.

3. The aqueous polyurethane coating composition of claim 1, wherein the aminoplast resin component (b) comprises a melamine-formaldehyde condensation product.

4. The aqueous polyurethane coating composition of claim 1, wherein the aminoplast resin component (b) comprises an oligomeric methylated melamine-formaldehyde condensation product comprising imino groups, methoxymethyl groups, and methylol groups.

5. The aqueous polyurethane coating composition of claim 4, wherein an equivalent ratio of methylol groups and alkoxylmethyl groups of component (b) to hydroxyl groups of component (a) is at least 0.05:1.

6. The aqueous polyurethane coating composition of claim 1, wherein the polycarbonate-polyurethane resin component (c) comprises a reaction product of a polycarbonate polyol and a polyisocyanate selected from the group consisting of 4,4'-diisocyanatodicyclohexylmethane, isophorone diisocyanate, 1,6-hexamethylene diisocyanate, and 1-methyl-2,4(2,6)-diisocyanatocyclohexane.

7. The aqueous polyurethane coating composition of claim 6, wherein the polycarbonate polyol has a number average molecular weight range 500 to 6000.

8. The aqueous polyurethane coating composition of claim 1, wherein the polycarbonate-polyurethane resin component (c) is **characterized by** a glass transition temperature of between -60ºC and 0ºC.

9. The aqueous polyurethane coating composition of claim 1, wherein the polycarbonate-polyurethane resin component (c) is **characterized by** a viscosity at 25ºC of less than 500 mPa•s in an 38% to 42% solids aqueous dispersion.

10. The aqueous polyurethane coating composition of claim 1, comprising:
99% to 1% by weight on a solids basis of the water-dilutable hydroxy-functional polyether-polyurethane resin and a water-dilutable aminoplast resin; and
1% to 99% by weight on a solids basis of the water-dilutable polycarbonate-polyurethane resin
wherein the weight percents total 100% by weight.

11. The aqueous polyurethane coating composition of claim 10, comprising:
60% to 90% by weight on a solids basis of the water-dilutable hydroxy-functional polyether-polyurethane resin; a water-dilutable aminoplast resin; and
40% to 10% by weight on a solids basis of the water-dilutable polycarbonate-polyurethane resin
wherein the weight percents total 100% by weight.

12. The aqueous polyurethane coating composition of claim 1, wherein the weight ratio on a solids basis of the hydroxy-functional polyether-polyurethane resin to the aminoplast resin is from 40:60 to 99:1.

13. The aqueous polyurethane coating composition of claim 12, wherein the weight ratio on a solids basis of the hydroxy-functional polyether-polyurethane resin to the aminoplast resin is from 60:40 to 85:15.

14. The aqueous polyurethane coating composition of claim 1, further comprising a silane-functional adhesion promoter.

15. The aqueous polyurethane coating composition of claim 14, wherein the adhesion promoter is selected from the group consisting of γ-mercaptopropyl-trimethoxysilane, 3-aminopropyltriethoxysilane, 3-aminopropylsilane hydrolysate, 3-glycidyloxypropyltriethoxysilane, and combinations of any thereof.

16. The aqueous polyurethane coating composition of claim 1, further comprising an additional polyol resin selected from the group consisting of water-dispersible hydroxy-functional polyester resins, water-dispersible hydroxy-functional polyacrylic resins, water-dispersible hydroxyl functional polycarbonate resins and/or combinations thereof.

17. A substrate at least partially coated with the coating composition of claim 1.

18. A glass substrate at least partially coated with the coating composition of claim 1.

19. A glass container at least partially coated with the coating composition of claim 1.

## Patentansprüche

1. Wässrige Polyurethan-Beschichtungszusammensetzung, die frei von Blockierungsmitteln ist, umfassend:
(a) ein wasserverdünnbares hydroxylfunktionelles Polyurethanharz, umfassend ein Reaktionsprodukt von:
(A1) einem Polyisocyanat, das 50 bis 100 Gewichtsprozent eines aliphatischen Diisocyanats umfasst;
(A2) einem Polyol mit einer OH-Zahl von 25 bis 350 mg KOH/g Feststoffe; und
(A3) einer gegenüber Isocyanat reaktiven Komponente mit einer ionischen Gruppe oder potentiell ionischen Gruppe;
(b) ein wasserverdünnbares Aminoplastharz; und
(c) ein wasserverdünnbares Polycarbonat-Polyurethanharz,
wobei das Polycarbonat-Polyurethanharz nichtfunktionell ist.

2. Wässrige Polyurethan-Beschichtungszusammensetzung nach Anspruch 1, wobei die hydroxyfunktionelle Polyurethanharzkomponente (a) ein Reaktionsprodukt von:
(A1) 20 bis 60 Gew.-% einer PolyisocyanatKomponente, die 50 bis 100 Gew.-% 4,4'-Diisocyanatodicyclohexylmethan und 0 bis 50 Gew.-% andere aliphatische Polyisocyanate mit einem Molekulargewicht von 140 bis 1500 umfasst;
(A2) 20 bis 60 Gew.-% einer Polyetherpolyol-Komponente mit einer OH-Zahl von 25 bis 350 mg KOH/g Feststoffe;
(A3) 2 bis 12 Gew.-% eine anionischen oder potentiell anionischen Komponente mit einer gegenüber Isocyanat reaktiven Gruppe und einer ionischen oder potentiell ionischen Gruppe;
(A4) 0 bis 12 Gew.-% einer nichtionischen hydrophilen Komponente mit einer oder zwei gegenüber Isocyanat reaktiven Gruppen und einer seitenständigen oder endständigen hydrophilen Polyetherkette;
(A5) 0 bis 15 Gew.-% eines mehrwertigen Alkohols mit 2 bis 4 Hydroxylgruppen und einem Molekulargewicht von 62 bis 250;
(A6) 0 bis 15 Gew.-% eines (cyclo)aliphatischen Polyamins mit 2 bis 4 Aminogruppen und einem Molekulargewicht von 60 bis 300;
(A7) 0 bis 30 Gew.-% eines (cyclo)aliphatischen Polyamins/Polyols mit insgesamt 2 bis 4 Hydroxyl- und Aminogruppen und einem Molekulargewicht von 61 bis 300; und
(A8) 0 bis 15 Gew.-% einer oder mehrerer Stabilisierungskomponenten, die für die Zwecke einer Isocyanatadditionsreaktion monofunktionell oder difunktionell sind und 1 bis 2 Hydrazidgruppen und ein Molekulargewicht von 74 bis 300 aufweisen;
umfasst.

3. Wässrige Polyurethan-Beschichtungszusammensetzung nach Anspruch 1, wobei die Aminoplastharzkomponente (b) ein Melamin-Formaldehyd-Kondensationsprodukt umfasst.

4. Wässrige Polyurethan-Beschichtungszusammensetzung nach Anspruch 1, wobei die Aminoplastharzkomponente (b) ein oligomeres methyliertes MelaminFormaldehyd-Kondensationsprodukt umfasst, das Iminogruppen, Methoxymethylgruppen und Methylolgruppen umfasst.

5. Wässrige Polyurethan-Beschichtungszusammensetzung nach Anspruch 4, wobei das Äquivalenzverhältnis von Methylolgruppen und Alkoxymethylgruppen von Komponente (b) zu Hydroxygruppen von Komponente (a) mindestens 0,05:1 beträgt.

6. Wässrige Polyurethan-Beschichtungszusammensetzung nach Anspruch 1, wobei die Polycarbonat-Polyurethanharzkomponente (c) ein Reaktionsprodukt eines Polycarbonatpolyols und eines Polyisocyanats aus der Gruppe bestehend aus 4,4'-Diisocyanatodicyclohexylmethan, Isophorondiisocyanat, 1,6-Hexamethylendiisocyanat und 1-Methyl-2,4(2,6)-diisocyanatocyclohexan umfasst.

7. Wässrige Polyurethan-Beschichtungszusammensetzung nach Anspruch 6, wobei das Polycarbonatpolyol einen Bereich des zahlenmittleren Molekulargewichts von 500 bis 6000 aufweist.

8. Wässrige Polyurethan-Beschichtungszusammensetzung nach Anspruch 1, wobei die Polycarbonat-Polyurethanharzkomponente (c) durch eine Glasübergangstemperatur zwischen -60 °C und 0 °C gekennzeichnet ist.

9. Wässrige Polyurethan-Beschichtungszusammensetzung nach Anspruch 1, wobei die Polycarbonat-Polyurethanharzkomponente (c) durch eine Viskosität bei 25 °C von weniger als 500 mPa·s in einer wässrigen Dispersion mit 38 % bis 42 % Feststoffen gekennzeichnet ist.

10. Wässrige Polyurethan-Beschichtungszusammensetzung nach Anspruch 1, umfassend:
99 Gew.-% bis 1 Gew.-%, bezogen auf die Feststoffe, des wasserverdünnbaren hydroxyfunktionellen Polyether-Polyurethanharzes und eines wasserverdünnbaren Aminoplastharzes; und
1 Gew.-% bis 99 Gew.-%, bezogen auf die Feststoffe, des wasserverdünnbaren Polycarbonat-Polyurethanharzes;
wobei die Summe der Gewichtsprozentwerte 100 % beträgt.

11. Wässrige Polyurethan-Beschichtungszusammensetzung nach Anspruch 10, umfassend:
60 Gew.-% bis 90 Gew.-%, bezogen auf die Feststoffe, des wasserverdünnbaren hydroxyfunktionellen Polyether-Polyurethanharzes; eines wasserverdünnbaren Aminoplastharzes; und
40 Gew.-% bis 10 Gew.-%, bezogen auf die Feststoffe, des wasserverdünnbaren Polycarbonat-Polyurethanharzes;
wobei die Summe der Gewichtsprozentwerte 100 % beträgt.

12. Wässrige Polyurethan-Beschichtungszusammensetzung nach Anspruch 1, wobei das Gewichtsverhältnis, bezogen auf die Feststoffe, von hydroxyfunktionellern Polyether-Polyurethanharz zu Aminoplastharz 40:60 bis 99:1 beträgt.

13. Wässrige Polyurethan-Beschichtungszusammensetzung nach Anspruch 12, wobei das Gewichtsverhältnis, bezogen auf die Feststoffe, von hydroxyfunktionellem Polyether-Polyurethanharz zu Aminoplastharz 60:40 bis 85:15 beträgt.

14. Wässrige Polyurethan-Beschichtungszusammensetzung nach Anspruch 1, ferner umfassend einen silanfunktionellen Haftvermittler.

15. Wässrige Polyurethan-Beschichtungszusammensetzung nach Anspruch 14, wobei der Haftvermittler aus der Gruppe bestehend aus γ-Mercaptopropyltrimethoxysilan, 3-Aminopropyltriethoxysilan, 3-Aminopropylsilanhydrolysat, 3-Glycidyloxypropyltriethoxysilan und Kombinationen von beliebigen davon ausgewählt ist.

16. Wässrige Polyurethan-Beschichtungszusammensetzung nach Anspruch 1, ferner umfassend ein zusätzliches Polyolharz aus der Gruppe bestehend aus wasserdispergierbaren hydroxyfunktionellen Polyesterharzen, wasserdispergierbaren Polyacrylharzen, wasserdispergierbaren hydroxyfunktionellen Polycarbonatharzen und/oder Kombinationen davon.

17. Substrat, das mindestens teilweise mit der Beschichtungszusammensetzung nach Anspruch 1 beschichtet ist.

18. Glassubstrat, das mindestens teilweise mit der Beschichtungszusammensetzung nach Anspruch 1 beschichtet ist.

19. Glasbehälter, der mindestens teilweise mit der Beschichtungszusammensetzung nach Anspruch 1 beschichtet ist.

## Revendications

1. Composition aqueuse de revêtement à base de polyuréthane exempte d'agents de blocage, comprenant :
(a) une résine de polyuréthane à fonctionnalité hydroxy capable d'être diluée à l'eau, comprenant un produit réactionnel de :
(A1) un polyisocyanate comprenant 50 à 100 % en poids d'un diisocyanate aliphatique ;
(A2) un polyol ayant un indice OH de 25 à 350 mg de KOH/g de solides ; et
(A3) un constituant réagissant avec les isocyanates, comprenant un groupe ionique ou un groupe potentiellement ionique ;
(b) une résine aminoplaste pouvant être diluée à l'eau ; et
(c) une résine de polycarbonate-polyuréthane pouvant être diluée à l'eau,
dans laquelle la résine de polycarbonate-polyuréthane est non fonctionnelle.

2. Composition aqueuse de revêtement à base de polyuréthane selon la revendication 1, dans laquelle le constituant résine de polyuréthane à fonctionnalité hydroxy (a) comprend un produit réactionnel de :
(A1) 20 % à 60 % en poids d'un constituant polyisocyanate comprenant 50 % à 100 % en poids de 4,4'-diisocyanatodicyclohexylméthane et de 0 à 50 % en poids d'autres polyisocyanates aliphatiques ayant une masse moléculaire de 140 à 1 500 ;
(A2) 20 % à 60 % en poids d'un constituant polyéther polyol ayant un indice OH de 25 à 350 mg de KOH/g de solides ;
(A3) 2 % à 12 % en poids d'un constituant anionique ou potentiellement anionique comprenant un groupe réagissant avec les isocyanates et un groupe ionique ou potentiellement ionique ;
(A4) 0 % à 12 % en poids d'un constituant hydrophile non ionique comprenant un ou deux groupes réagissant avec les isocyanates et une chaîne polyéther hydrophile latérale ou terminale ;
(A5) 0 % à 15 % en poids d'un alcool polyhydrique comportant 2 à 4 groupes hydroxyle et ayant une masse moléculaire de 62 à 250 ;
(A6) 0 % à 15 % en poids d'une polyamine (cyclo)aliphatique comportant 2 à 4 groupes amino et ayant une masse moléculaire de 60 à 300 ;
(A7) 0 % à 30 % en poids d'un composé de polyamine (cyclo)aliphatique/polyol comportant au total 2 à 4 groupes hydroxyle et amino et ayant une masse moléculaire de 61 à 300 ; et
(A8) 0 % à 15 % en poids d'un ou plusieurs constituants stabilisants qui sont monofonctionnels ou difonctionnels aux fins d'une réaction d'addition d'isocyanate et qui comportent 1 à 2 groupes hydrazide et ont une masse moléculaire de 74 à 300.

3. Composition aqueuse de revêtement à base de polyuréthane selon la revendication 1, dans laquelle le constituant résine aminoplaste (b) comprend un produit de condensation de mélamine-formaldéhyde.

4. Composition aqueuse de revêtement à base de polyuréthane selon la revendication 1, dans laquelle le constituant résine aminoplaste (b) comprend un produit de condensation de mélamine-formaldéhyde méthylé oligomère comprenant des groupes imino, des groupes méthoxyméthyle, et des groupes méthylol.

5. Composition aqueuse de revêtement à base de polyuréthane selon la revendication 4, dans laquelle un rapport équivalent des groupes méthylol et des groupes alcoxylméthyle du constituant (b) contre les groupes hydroxyle du constituant (a) est d'au moins 0,05:1.

6. Composition aqueuse de revêtement à base de polyuréthane selon la revendication 1, dans laquelle le constituant résine de polycarbonate-polyuréthane (c) comprend un produit réactionnel d'un polycarbonate polyol et d'un polyisocyanate sélectionné dans le groupe constitué du 4,4'-diisocyanatodicyclohexylméthane, du diisocyanate d'isophorone, du diisocyanate de 1,6-hexaméthylène, et du 1-méthyl-2,4(2,6)-diisocyanatocyclohexane.

7. Composition aqueuse de revêtement à base de polyuréthane selon la revendication 6, dans laquelle le polycarbonate polyol a une masse moléculaire moyenne en nombre de 500 à 6 000.

8. Composition aqueuse de revêtement à base de polyuréthane selon la revendication 1, dans laquelle le constituant résine de polycarbonate-polyuréthane (c) est **caractérisé par** une température de transition vitreuse de -60 ºC à 0 ºC.

9. Composition aqueuse de revêtement à base de polyuréthane selon la revendication 1, dans laquelle le constituant résine de polycarbonate-polyuréthane (c) est **caractérisé par** une viscosité à 25 ºC inférieure à 500 mPa · s dans une dispersion aqueuse à 38 % à 42 % de solides.

10. Composition aqueuse de revêtement à base de polyuréthane selon la revendication 1, comprenant :
99 % à 1 % en poids en solides de la résine de polyéther-polyuréthane à fonctionnalité hydroxy pouvant être diluée à l'eau et d'une résine aminoplaste pouvant être diluée à l'eau ; et
1 % à 99 % en poids en solides de la résine de polycarbonate-polyuréthane pouvant être diluée à l'eau,
dans laquelle les pourcentages en poids représentent au total 100 % en poids.

11. Composition aqueuse de revêtement à base de polyuréthane selon la revendication 10, comprenant :
60 % à 90 % en poids en solides de la résine de polyéther-polyuréthane à fonctionnalité hydroxy pouvant être diluée à l'eau ; une résine aminoplaste pouvant être diluée à l'eau ; et
40 % à 10 % en poids en solides de la résine de polycarbonate-polyuréthane pouvant être diluée à l'eau,
dans laquelle les pourcentages en poids représentent au total 100 % en poids.

12. Composition aqueuse de revêtement à base de polyuréthane selon la revendication 1, dans laquelle le rapport pondéral en solides de la résine de polyéther-polyuréthane à fonctionnalité hydroxy contre la résine aminoplaste est de 40:60 à 99:1.

13. Composition aqueuse de revêtement à base de polyuréthane selon la revendication 12, dans laquelle le rapport pondéral en solides de la résine de polyéther-polyuréthane à fonctionnalité hydroxy contre la résine aminoplaste est de 60:40 à 85:15.

14. Composition aqueuse de revêtement à base de polyuréthane selon la revendication 1, comprenant en outre un promoteur d'adhérence à fonctionnalité silane.

15. Composition aqueuse de revêtement à base de polyuréthane selon la revendication 14, dans laquelle le promoteur d'adhérence est sélectionné dans le groupe constitué du γ-mercaptopropyltriméthoxysilane, du 3-aminopropyltriéthoxysilane, d'un hydrolysat de 3-aminopropylsilane, du 3-glycidyloxypropyltriéthoxysilane, et de combinaisons de ceux-ci.

16. Composition aqueuse de revêtement à base de polyuréthane selon la revendication 1, comprenant en outre une résine de polyol additionnelle sélectionnée dans le groupe constitué de résines de polyester à fonctionnalité hydroxy dispersibles dans l'eau, de résines polyacryliques à fonctionnalité hydroxy dispersibles dans l'eau, de résines de polycarbonate à fonctionnalité hydroxyle dispersibles dans l'eau, et/ou combinaisons de celles-ci.

17. Substrat au moins partiellement revêtu de la composition de revêtement selon la revendication 1.

18. Substrat en verre au moins partiellement revêtu de la composition de revêtement selon la revendication 1.

19. Récipient en verre au moins partiellement revêtu de la composition de revêtement selon la revendication 1.
